# EUROPEAN PATENT SPECIFICATION

(11) **EP 3 185 690 B1**
(45) Date of publication and mention of the grant of the patent: **25.12.2019**
(21) Application number: 15781447.6
(22) Date of filing: 31.08.2015
(51) Int. Cl.: A23C 9/16, A23C 9/18, B30B 11/00

(54) **METHOD AND DEVICE FOR MAKING COMPRESSED SOLID MILK TABLETS**
VERFAHREN UND ANLAGE ZUR HERSTELLUNG KOMPRIMIERTER FESTSTOFFMILCHTABLETTEN
PROCÉDÉ ET APPAREIL DE FABRICATION DES COMPRIMÉS DE LAIT À L'ÉTAT SOLIDE

(30) Priority: 29.08.2014 WO PCT/NL2014/050590
(43) Date of publication of application: 05.07.2017
(73) Proprietor: N.V. Nutricia, 2712 HM Zoetermeer (NL); Eurotab Innovation, 42173 Saint-Just Saint-Rambert (FR)
(72) Inventor: CHAURIN, Valérie Elvira Suzanne, George Street Country Wexford (IE); VALK, Maarten, NL-3584 CT Utrecht (NL); VAN DER HOEVEN, Martijn Johannes, NL-3584 CT Utrecht (NL); COENEN, Gerardus Johannes, NL-3584 CT Utrecht (NL)
(74) Representative: Nederlandsch Octrooibureau
(86) International application number: PCT/NL2015/050603
(87) International publication number: WO 2016/032337

(56) References cited:
- WO-A1-00/27618
- WO-A1-2004/023896
- WO-A1-2010/073724
- WO-A1-2011/158480
- DE-C- 304 445
- FR-A1- 2 970 400
- GB-A- 2 466 635
- DATABASE GNPD [Online] MINTEL; January 2007 (2007-01), Anonymous: "Pocket Milk", XP002732040, Database accession no. 645969
- DATABASE GNPD [Online] MINTEL; 5 February 2014 (2014-02-05), Anonymous: "High Calcium Milk Tablets for Growth in Children", XP002732041, Database accession no. 2449801
- Ali Nokhodchi: "An Overview of the Effect of Moisture on Compaction and Compression States of water in a powder", Pharmaceutical Technology JANUARY, 1 January 2005 (2005-01-01), XP055151101, Retrieved from the Internet: URL:http://www.pharmtech.com/pharmtech/dat a/articlestandard/pharmtech/022005/141826/ article.pdf [retrieved on 2014-11-05]

## Description

### Field of the invention

The present invention is in the field of nutrition and relates to compressed solid milk tablets, a method for producing the same and a modular system for carrying out said method. More in particular, the present disclosure relates to compressed solid milk tablets for feeding infants. Typically, the solid milk tablets comprise dry milk-based nutritional compositions selected from infant formula, follow-on milk, growing-up milk or the like.

### Background of the invention

In the food industry there is a constant demand for increasing the convenience of food products. In particular, milk containing products need specific care in order to prevent early microbial spoilage. Since a long time milk-based infant formulations are produced in the form of dry powders since such dry products remain of good quality for much longer periods of time compared to liquid milk products. Milk powders, however, are not very convenient since a measuring device of some kind is needed to measure the right dose when dissolving the powder to obtain a ready-to-drink liquid.

To solve the dosing problem, it has been proposed to use solid milk tablets which are tablets that are prepared by compacting or compressing milk powder. Solid milk tablets are generally provided or described as cubes, pellets, spheres or pills and can have any suitable form or shape such as being rectangular, square or ball shaped. The amount of dry milk powder per solid milk tablet can be selected such that, after being reconstituted in a predetermined amount of water per solid milk unit, a ready-to-drink liquid is obtained that contains a quantity of macro- and micronutrients, vitamins and minerals as desired.

Factors to be considered in manufacturing solid milk tablets that also fulfil consumer demands include tablet hardness (both during and after processing), friability, reconstitution and solubility properties. A sufficient hardness is mainly of importance for processing and handling purposes in the factory and to allow safe transport of the solid milk units. Furthermore, in order to satisfy consumer demands, the solid milk units should reconstitute sufficiently well in a liquid medium and have a good solubility. Furthermore, the solid milk units should have a sufficiently shelf-life.

WO2006/004190 A1 and WO2007/077970 A1 describe solid milk tablets, the volume of which being between 1 cm³ to 50 cm³, having a porosity of 30%-60%, a fat content equal to or more than 5% by weight, a water content between 1% to 4% by weight. It also discloses a method of producing said tablets, comprising certain compression, humidification and drying steps. Each of the three steps of such a method having a significant duration, the total duration of the process is long and, as consequence, it does not make it possible to obtain a satisfactory production rate.

WO2010/073724 describes an alternative kind of solid milk, manufactured according to a method comprising the same three steps of compaction moulding, humidification and drying which includes an additional classification step. FR 2 970 400 discloses a manufacturing method of milk comprising the steps of compressing milk powder at a speed of compression between 110 and 200 mm/s to obtain a solid unit, moistening the solid unit with a quantity of water between 0.1 and 8 mg/cm² of surface area of the solid unit, and then drying the solid unit. WO 2011/158480 also describes a method for the manufacture of solid milk comprising the steps of compressing powdered milk to obtain solid compressed powdered milk, humidifying the compressed powdered milk to obtain humidified compressed powdered milk, and drying the humidified compressed powdered milk to obtain the solid milk.

EP1048216 discloses yet an alternative method wherein the powder is wetted and agglomerated before the compression step. This has several negative implications, including the fact that the powder will not be free flowable anymore, making it difficult to feed the tabletting machine and in addition, it will be much more difficult to dry the compressed tablet since the interior of the tablet is still humid and will dry much slower resulting in an unacceptable risk of microbial growth.

When processing milk powders or milk containing powders into tablets, it is important that the capacity of the process is sufficiently high. For example, when producing infant formula, a capacity of several tons of compacted infant formula per day should be feasible. If an average tablet weight is about 4-5 grams, 200,000 tablets represent about 1 ton compacted powder. For example, a tabletting speed of 750 tablets per minute will result in a production speed of about 4.5 hours per ton powder. A high speed process is therefore necessary. None of WO2007/077970, WO2010/073724 and EP1048216 disclose a solid milk manufacturing method with sufficient high throughput.

WO2012/099472 discloses a method of producing solid milk tablets with which high numbers of tablets can be produced per time unit. It discloses a method comprising a compression step, a moistening step and a drying step. In the moistening step, water is sprayed on the outside surface of said compressed and solid milk unit, the duration of the moistening step being less than 1 second. As a result, solid milk tablets are obtained that have a defined core/crust structure.

Notwithstanding the existing body of prior art and available solid milk tablets, there remains a need for obtaining improved solid milk units that better suit consumer demands.

### Summary of the invention

It is an object of the present invention to provide solid milk tablets with improved properties, in particular properties that include friability, shelf-life, mechanical strength and/or sensorial quality aspects. More in particular, it is an object of the present invention to provide solid milk tablets that feature a combination of these improved properties while reconstitution properties remain at a level that is more than acceptable for the targeted consumer that needs to prepare a liquid ready-to-feed nutritional formulation.

Furthermore, it is an object of the present invention to provide a method for producing said solid milk tablets, wherein the method allows being operated at high throughput capacity and at such high speeds that individual solid milk tablets are subjected to the processing steps of the invention for not more than ten minutes, preferably not more than five minutes or even less. Advantages of fast processing of milk particles into individual solid milk tablets include, *inter alia,* a lower likelihood of microbial contamination to occur, reduced risk of microbial growth, product spoilage and reduced or substantially no discoloration of dry milk particles that are used in and during the preparation of the solid milk tablets. Another benefit of short processing times is that the quality of the solid milk tablets remains of a sufficiently high level as manipulation of the individual tablets is minimised.

Also, it is an object of the present invention to provide a solid milk tablet preparation method wherein the humidification times are kept within a fraction of a minute as opposed to minutes to reduce chances of microbial contamination and/or spoilage to occur.

This object or these objects, wholly or partially, is/are achieved by the present invention according to the appended claims.

More in particular, the present invention relates to a method for preparing compressed solid milk tablets, comprising the steps of:
a) compressing milk powder to obtain compressed solid milk units with a mechanical strength of between 10k Pa and 300 kPa,
b) humidifying the compressed solid milk units by exposing said units in a humidifying chamber to humid air having a relative humidity of more than 95% and a temperature of between 60 and 90°C, wherein the humid air comprises condensed water droplets, wherein the exposure time of the solid milk units in the humidifying chamber is less than 5 seconds, and
c) drying the humidified milk units to obtain compressed solid milk tablets.

Preferably, the exposure time during which the solid milk units are exposed to the prevalent conditions in the humidifying chamber is between 1 and 4 seconds.

Preferably, in step b) the solid milk units absorb an amount of water in the range of from 0.3 to 4 mg water per cm² surface area of the solid milk unit, preferably from 0.5 mg to 3 mg per cm², more preferably from 0.7 mg to 2.0 mg/cm².

Preferably, in step b), humid air having a relative humidity of 99% or 100%, and comprising condensed water vapour is injected or conveyed into the humidifying chamber.

Preferably, the compressed solid milk units have a temperature of between 4 and 30°C, preferably between 10 and 25°C upon entry into the humidifying chamber in step b). Using solid milk units with a temperature that is well below the selected temperature at which the humidification chamber is operated aids in water condensing to occur at the surface of the solid milk unit.

Furthermore, compressed solid milk tablets obtainable by the method of the present invention are disclosed herein. The compressed solid milk tablets obtainable by the method of the present invention preferably have the following properties: a core/crust structure, wherein the crust preferably has an average thickness of between 150 µm and 1500 µm and the thickness of the crust preferably corresponds to at least two rows of particles thick; a friability of less than 5%, as determined with the herein mentioned friability test method; a surface porosity of between 6 and 22%, as determined with the herein mentioned test method; a YI E313 white - yellow index of below 40 and/or a mechanical strength of between 20 kPa and 1000 kPa.

The solid milk tablets are intended to be a substitute to dry (infant) milk formula and are thus meant and designed to be taken up and dissolved into a liquid, preferably warm water, before consumption takes place. The solid milk tablets are not meant to be used as chewable tablets and are not meant to be reconstituted or dissolved in the oral cavity of a subject. A reconstitution step to a liquid phase is therefore to be included in the preparation before consumption is to be commenced.

It relates to compressed solid milk tablets having a core/crust structure, wherein the crust preferably has an average thickness of between 150 µm and 1500 µm and wherein the tablets have a friability of less than 5%, as determined with the herein mentioned friability test method. The crust preferably has a thickness that corresponds to at least two rows of particles thick.

It relates to compressed solid milk tablets having a YI E313 white - yellow index of below 40, more preferably below 35, most preferably between 15 and 35 and a have a friability of less than 5%, as determined with the herein mentioned friability test method.

It relates to compressed solid milk tablets having a core/crust structure, wherein the crust preferably has an average thickness of between 150 µm and 1500 µm and wherein the tablets have a surface porosity of between 6 and 22%, as determined with the herein mentioned test method. The crust preferably has a thickness that corresponds to at least two rows of particles thick.

It relates to compressed solid milk tablets having a YI E313 white - yellow index of below 40, more preferably below 35, most preferably between 15 and 35 and a have a friability of less than 5%, as determined with the herein mentioned friability test method.

The solid milk tablets preferably have a mechanical strength of between 20 kPa and 1000 kPa, more preferably between 40 kPa and 800 kPa, even more preferably between 60 and 700 kPa, most preferably between 80 and 600 kPa.

In a preferred embodiment, the compressed solid milk tablets directly obtained by the method of the present invention are ready-for-use, meaning they can be reconstituted into an aqueous liquid such as water. Preferably, no additional processing steps are required on the compressed solid milk tablets that, for instance, would change the integrity of the obtained tablets, the physical appearance thereof or their organoleptic properties. In a preferred embodiment, the compressed solid milk tablets are ready-to-use and packaged such that they can be transported and sold to the consumer.

The present invention relates to a method of producing compressed solid milk tablets, wherein a step is included of exposing solid milk units in a humidifying chamber to humid air having a relative humidity of more than 95% and a temperature of between 60 and 90°C, wherein the humid air comprises condensed water droplets, wherein the exposure time of the solid milk units in the humidifying chamber is less than 5 seconds.

It has now been surprisingly found that the method of the present invention permits to manufacture, with a high capacity and under conditions that prevent as much as possible microbial contamination, compressed solid milk tablets that are of sufficient high hardness/mechanical strength after compacting but before drying which allows downstream handling with minimised fallout during manufacturing, while said units have a preferred high hardness/mechanical strength in their ready-to-use form. This allows safe transport of such solid milk tablets from manufacturing and handling sites to eventually the consumer in a qualitative satisfactory condition. This also minimises the necessity to take precautionary measures that may otherwise be required to prevent breakage of the solid units during transport, such as the use of cushioning elements or packing them in tight vacuum wrappings for support. Moreover, said units exhibit excellent reconstitution behaviour thereby meeting consumer demands, such as the expectation to be able to obtain a liquid nutritional composition for feeding infants with little or no lump formation which allows easy passage through the teat of a baby feeding bottle. Also, said tablets retain these reconstitution properties over prolonged periods of time.

### List of preferred embodiments

1. A method for preparing compressed solid milk tablets, comprising the steps of:
   a) compressing milk powder to obtain compressed solid milk units with a mechanical strength of between 10 kPa and 300 kPa,
   b) humidifying the compressed solid milk units by exposing said units in a humidifying chamber to humid air having a relative humidity of more than 95% and a temperature of between 60 and 90°C, wherein the humid air comprises condensed water droplets, wherein the exposure time of the solid milk units in the humidifying chamber is less than 5 seconds, and
   c) drying the humidified and compressed solid milk units to obtain compressed solid milk tablets.
2. The method according to 1, wherein the compaction ratio of the compressed solid milk units obtained in step a) lies between 0.30 and 0.65, preferably between 0.40 and 0.62, more preferably between 0.47 and 0.60.
3. The method according to 1 and/or 2, wherein the milk powder comprises particles having an average size comprised between 30 µm and 700 µm, preferably comprised between 60 µm and 400 µm, more preferably comprised between 75 µm and 300 µm.
4. The method according to any one of 1 to 3, wherein the compressed solid milk units have a total surface area of between 10 and 50 cm², preferably 15 to 40 cm², more preferably between 18 and 35 cm², most preferably between 20 and 25 cm².
5. The method according to any one of 1 to 4, wherein the solid milk units have a total weight of between 1 and 10 grams, preferably between 2 and 8 grams, more preferably between 4 and 6 grams or about 5 grams.
6. The method according to any one of 1 to 5, wherein the compressed solid milk units have a temperature of between 4 and 30°C, preferably between 10 and 25°C upon entry of the humidifying chamber in step b).
7. The method according to any one of 1 to 6, wherein the exposure time in the humidifying chamber is less than 5 seconds, preferably between 1 and 4 seconds.
8. The method according to any one of 1 to 7, wherein the humidifying chamber is provided with humid air that is generated by boiling or holding water at a temperature which is elevated with respect to the temperature to which the solid milk units are exposed in the humidifying chamber to allow condensing of water vapour to occur.
9. The method according to any one of 1 to 8, herein the humidifying chamber is provided with air that is generated by boiling or holding water at a temperature which is at least 50°C higher than the temperature in the humidifying chamber to which the solid compressed units are exposed to allow condensing of water vapour to occur.
10. The method according to any one of 1 to 9, wherein in step b) the solid milk units absorb an amount of water in the range of from 0.3 to 4 mg water per cm² surface area of the solid milk unit, preferably from 0.5 mg to 3 mg per cm², more preferably from 0.7 mg to 2.0 mg/cm².
11. The method according to any one of 1 to 10, wherein in step b) the solid milk units absorb an amount of water in the range of from 0.10 to 2.0 wt%, preferably from 0.2 to 1.50 wt%, more preferably from 0.25 to 1.25 wt%, most preferably 0.25 to 0.45 wt% during humidification.
12. The method according to any one of 1 to 11, wherein in step b), the solid milk units are conveyed through the humidifying chamber.
13. The method according to any one of 1 to 12, wherein the drying step is carried out by infrared radiation.
14. The method according to any one of 1 to 13, wherein the drying step results in a moisture level of the solid milk tablet which lies within a range of +/- 0.2 % of the initial moisture level of the milk powder.
15. The method according to any one of 1 to 14, wherein after drying, a packaging step is included wherein solid milk tablets are packaged in a sealed package, preferably a sealed package comprising a replacement gas such as nitrogen and/or carbon dioxide.
16. The method according to any one of 1 to 15, wherein in step b) the solid milk units absorb an amount of water in the range of from 5 to 100 mg water per unit, preferably from 10 to 75 mg per unit, more preferably from 15 to 55 mg per unit.
17. The method according to any one of 1 to 16, wherein the drying step follows the moistening step within less than 5 minutes, preferably within less than 1 minute, more preferably within less than 30 seconds, more preferably within less than 5 seconds.
18. The method according to any one of 1 to 17, wherein the drying in step c) is for less than 5 minutes, preferably less than 2 minutes, more preferably the drying time lies between 10 and 60 seconds.
19. The method according to any one of 1 to 18, wherein after the drying step, a cooling step is included during which the solid milk tablet is cooled to a temperature below 30°C, preferably to a temperature between 0°C and 30°C, most preferably between 15°C and 25°C.
20. The method according to any one of 1 to 19, wherein the obtained solid milk tablets have a friability of less than 5%.
21. The method according to any one of 1 to 20, wherein the milk powder used in step a) is or comprises an infant milk powder formula.
22. A modular system for carrying out the method according to 1-21, comprising:
   - a device for compressing milk powder to obtain compressed solid milk units with a mechanical strength of between 10 kPa and 300 kPa,
   - a humidifying system including a humidifying chamber for humidifying compressed solid milk units and means for producing a humid environment in the humidifying chamber, said environment comprising a relative humidity of more than 95%, a temperature of between 60 and 90°C and condensed water droplets, to obtain compressed humidified and compressed solid milk units,
   - a drying device for drying the humidified and compressed solid milk units, and
   - means for conveying or providing solid milk units from the compression device to the humidifying system and subsequently to the drying device for drying.
23. A modular system according to 22, wherein the humidifying chamber and means for producing the humid environment, preferably a water boiling device, are in fluid connection allowing humid air to be passed from said means to the humidifying chamber.
24. A modular system according to 22 or 23, comprising a packaging device for packaging of the solid milk tablets in a sealed package, preferably in a sealed package comprising a replacement gas such as nitrogen and/or carbon dioxide.
25. A modular system according to any of 22-24, wherein the modular system is placed in a high-care environment or high-care zone.
26. A modular system according to any of 22-25, wherein solid milk units are conveyed to and through the humidifying chamber, preferably using a conveyor belt.
27. A modular system according to any of 22-26, wherein the drying device comprises infra-red lamps to obtain a drying temperature of between 90 and 180°C.

### Detailed description of the invention

### METHOD OF PRODUCING COMPRESSED SOLID MILK UNITS

The present invention relates to a method for preparing compressed solid milk tablets, comprising the steps of,
a) compressing of dry milk particles to obtain a compressed solid milk unit with a mechanical strength of between 10 kPa and 300 kPa,
b) humidifying the compressed solid milk units by exposing said units in a humidifying chamber to humid air having a relative humidity of more than 95% and a temperature of between 60 and 90°C, wherein the humid air comprises condensed water droplets, wherein the exposure time of the solid milk units in the humidifying chamber is less than 5 seconds, and
c) drying the humidified milk units to obtain the compressed solid milk tablets.

### COMPRESSION STEP A)

Step a) comprises compressing of dry milk particles to obtain a compressed solid milk unit with a mechanical strength of between 10 kPa and 300 kPa, preferably between 20 and 200 kPa, more preferably between 25 and 150 kPa. Most preferably, said mechanical strength lies between 25 and 125 kPa.

During the compression step, the milk powder is compressed to obtain a compressed, solid milk unit. The compression speed is preferably comprised between 110 mm/s and 200 mm/s and more preferably between 125 mm/s to 170 mm/s.

Compression is advantageously carried out at a compaction ratio between 0.40 and 0.65 and at a compaction pressure between 1 and 40 MPa, preferably between 1 and 20MPa, more preferably between 1 and 10 MPa or between 1 and 6 MPa. Alternatively, step a) of the present invention is worded as compressing of dry milk particles at a compaction ratio between 0.40 and 0.65 and/or at a compaction pressure between 1 and 40 MPa, to preferably obtain a compressed solid milk unit with a mechanical strength of between 10 kPa and 300 kPa.

Preferably, the compaction ratio of the compressed solid milk units obtained in step a) lies between 0.40 and 0.65, more preferably between 0.47 and 0.62, even more preferably between 0.50 and 0.60. Such compaction ratios make it possible to obtain solid milk tablets that have suitable solubility and reconstitution properties when making a ready-to-feed liquid (infant) formula. More advantageously, solid milk units having a compaction ratio of between 0.50 and 0.58 can be subjected to a wider water absorption range than solid milks having a higher compaction ratio of for instance 0.60. At such more elevated compaction ratios, the hardness of the solid milk tablets may become unsuitable high, thereby compromising tablet reconstitution properties, when higher levels of moisture are allowed be taken up by the solid milk units during humidification.

Advantageously, solid milk units having the indicated compaction ratio and mechanical strength have a preferred open, porous structure that allows the humid air as mentioned herein (i.e. with high relative humidity and condensed water vapour) to penetrate into the solid milk units to a certain extent within short humidification times. This is held to yield solid milk tablets having a crust structure that is more homogenous and tablets that are less friable than for instance tablets that were humidified by applying a spray.

From a consumer convenience point of view, it is preferred to make solid milk tablets that can be used as a complete substitute for powderous (infant) nutrition. Preferably, the solid milk tablets are formed such that each tablet corresponds to one scoop of powderous (infant) nutrition. To achieve this, it is preferred that the compressed solid milks have the same nutritional value as one scoop of the nutritional powder that is used to make the solid milk tablet. Taking into consideration the compression process of the invention, the total weight of the tablets lies preferably between 1 and 15 grams, preferably between 2 and 10 grams, more preferably between 3 and 8 grams, most preferably 4 and 6 grams. Thus, a corresponding amount of milk powder is used in the compression step for preparation of the solid milk tablets of the present invention.

The total volume of the solid milk units obtainable by step a) may lie between 2 and 30 cm³, preferably between 4 and 20 cm³, more preferably between 6 and 12 cm³. Especially units having a weight of between 3 to 8 grams and having a volume of between 5 and 12 cm³ are particularly suited to be dissolved in a predetermined amount of water of between 15 and 60 ml, preferably 20 and 50 ml, more preferably 25 to 40 ml per unit and are thus very convenient for use by the consumer.

In a preferred embodiment, the compressed solid milk units or solid milk tablets have a total surface area of between 10 and 50 cm², preferably 15 to 40 cm², more preferably between 18 and 35 cm².

In a preferred embodiment, the milk powder to be compressed or compacted comprises particles that have an average size comprised between 30 µm and 700 µm, preferably comprised between 75 µm and 600 µm, more preferably comprised between 150 µm and 300 µm. In a preferred embodiment, the dry milk particles have a size of between 30 µm and 700 µm and a particle size distribution wherein less than 5% has a size smaller than 30 µm and less than 5% has a size of more than 700 µm, preferably the dry milk particles have a particle size distribution wherein more than 25% of said particles has a size between 100 µm and 600 µm, more preferably more than 50% of said particles has a size between 100 µm and 600 µm.

In another preferred embodiment, the milk particles used for preparing the compressed solid milk tablets have a moisture content of between 0.5 and 5 wt%, preferably between 1 and 3 wt% of the total weight of the milk.

In a preferred embodiment, the milk powder is selected from whole milk powder, skimmed, semi-skimmed milk powder and infant milk powder, preferably infant milk powder. In a more preferred embodiment, the milk powder to be compressed in step a) consists of an infant milk powder for more than 95%, 98% or even 100%. Ingredients such as excipients, carriers , sweeteners, lubricants or other such components that are typically added to tablets or pills that are produced in other technological fields (such as in the pharmaceutical field or field of producing chewable candy-like compositions that may comprise milk powder) are preferably not included in the infant milk powder used in step a).

The compression device, such as a compression die, is typically built such that some flexibility is allowed in making solid milk units having slightly different dimensions using the same device. This can be achieved by only varying the compression force with which the units are compacted or by only varying the amount of powder particles to be included in the compression chamber. Typically, the result is that merely one of the dimensions (height, width or length) of the block or brick shaped unit or tablet is varied. In accordance with one possible embodiment, a rotary press manufactured and sold by the firm EUROTAB TECHNOLOGIES is used to carry out the compression step in accordance to the conditions of the present invention.

At the end of the compression step, a compressed solid milk unit of compressed or compacted milk powder is obtained with a low initial hardness/low mechanical strength. Such a unit does not generally exhibit sufficient hardness/mechanical strength and friability to be packaged and shipped to the consumer. The inventors have demonstrated that the conditions of compression step a) as presented herein make it possible to obtain compressed, solid milk units that have sufficient cohesion to withstand the subsequent steps of the method of the present invention.

### HUMIDIFYING STEP B)

Step b) comprises humidifying the compressed solid milk units obtainable by executing step a) by exposing said units in a humidifying chamber to humid air having a relative humidity of more than 95% and a temperature of between 60 and 90°C, wherein the humid air comprises condensed water droplets. Air of such high humidity can be obtained by boiling water at a temperature that is higher than the temperature at which the humidification chamber is operated. Cooling of humid air which is at its saturated vapour density, *i.e.* its dew point, leads to condensing out of water vapour since this surplus water vapour cannot be held by the air in vapour form at the decreased temperature. Using humid air having such high amounts of water and of such high temperatures has the advantage that short humidification times can be used which in turn reduces the changes of microbial spoilage or contaminations to occur.

Without being bound by theory, it is held that the specific combination of the indicated high temperature range and very high humidity as maintained in the humidifying chamber, meaning both the (almost) saturated relative humidity (>95RH%, but preferably 100RH%) and presence of condensed water droplets obtained from water vapour condensing, allows the outer parts or layers of the solid milk units to absorb an amount of water, within a relatively short exposure time, such that the outer layers of milk particles become fluid to a certain extent causing these outer positioned particles to merge/fuse into a unified whole. Also, dissolution of soluble and film-forming ingredients is held to occur. It is furthermore held that condensed water vapour, present as finely dispersed water droplets, which contact the surface of the milk units in combination with the notion that the solid milk units can act as a condensing surface allowing water vapour to condense directly on the surface of the solid milk, allows for a high rate of humidity absorption, water deposit and spreading of water on the surface of solid milk units in a short humidifying time. In the subsequent drying step the formed connections solidify/dry again, thereby creating a solid outer crust of fused milk particles. The humidity has a stronger hydrating effect on the outer milk particle layers than the particles that are present in the more inner parts of the solid milk units such that the core of the solid milks mostly keeps its porous/low density configuration in which individual dry milk particles can be readily recognised on scanning electron microscopy (SEM) images. In comparison to spraying solid milks with water, it is noted that the humid air of (almost) saturated relative humidity that further comprises condensed water droplets has a better ability to penetrate to a certain extent into the open, porous milk units within the herein mentioned humidification times. Surprisingly, compressed solid milk tablets with particularly good friability, high mechanical strength properties and good reconstitution scores were obtained using these humidification conditions. Also, shelf-life of these solid milk tablets is good.

As a consequence of the prevailing conditions in the humidifying chamber, the exposure time of the solid milk units in step b) is for a period of less than 5 seconds, preferably less than 4.5 seconds, more preferably less than 4 seconds or 3.5 seconds and preferably for more than 1 second. More preferably, this humidifying time is for a period of between 1 and 4 seconds, even more preferably between 2 and 4 seconds. As stated above, the high temperature and very high humidity conditions allow the exposure time to be less than 5 seconds which still allows solid milk tablets to be formed according to the invention. Higher exposure times may result in too much water uptake by the units which may lead to stickiness of the solid milks which in turn hampers further processing as the units may adhere to a conveyor belt or other equipment used. Furthermore, too much water uptake may also compromise the targeted shape of the solid milks as a certain degree of disintegration of a percentage of solid milk units may occur which is unacceptable from an industrial production scale point of view. A short humidification time, meaning operating in a time frame of seconds rather than minutes or hours, is advantageous in view of diminished risk of microbial spoilage or contamination.

In a preferred embodiment, humid air having a temperature of more than 60°C with a relative humidity of more than 95% and comprising condensed water droplets is injected or conveyed into the humidifying chamber. Injecting or conveying said humid air, intermittently but preferably continuously, allows maintaining of the humidity and temperature conditions in the humidifying chamber as indicated. Preferably, the humid air has a temperature of between 60°C and 90°C and has a relative humidity of more than 95%, such as 99% or 100%.

In a preferred embodiment, the humid which is injected or conveyed in step b) is generated by boiling or holding water at a temperature (the generation temperature) which is elevated with respect to the temperature to which the solid milk unit is exposed (the exposure temperature). As demonstrated in the Example section, good results were obtained when water was boiled at 3 bar pressure (which corresponds to a temperature of about 133°C), conveying this humid air from the boiler to the humidifying chamber and feeding this humid air into the humidifying chamber which is operated at 60 to 90°C. This temperature drop ensures condensing of water vapour into fine water droplets to occur thereby contributing to the very high humidity conditions in the humidifying chamber.

More preferably, the humid air which is injected or conveyed in step b) is generated by boiling water at a temperature of 100°C or higher, more preferably 110°C or higher, even more preferably 120°C or higher, most preferably 130°C or higher such as up to 150°C. Worded differently, the humid air which is injected or conveyed in step b) is preferably generated by boiling water at a temperature which is at least 50°C higher than the temperature in the humidifying chamber to which the solid compressed units are exposed, more preferably at least 30°C, even more preferably at least 20°C or most preferably at least 10°C. This allows condensing of water vapour to occur during transport of humid air from the water boiling device to the humidifying chamber as well as operating the humidifying chamber with reduced or no additional heating since the heat comes from the humid air.

In another preferred embodiment, the humid air which is injected or conveyed in step b) is generated by boiling water at a pressure of 1 bar or more, more preferably at 2 bar or more, even more preferably at around 3 bar or even more than 3 bar such as up to 5 bar.

In a preferred embodiment, the condensed water droplets have a diameter of between 0.01 and 50 microns, more preferably between 0.1 and 40 microns. Such small condensed water droplets are airborne and sufficiently small to penetrate the compressed solid milk unit to more than the most outer layer of milk particles.

In a preferred embodiment, the uptake of (condensed) water is expressed as an amount per square surface area of the solid milk unit exposed in step b). The amount of water uptake per surface area is relevant since too much water uptake per surface area can lead to sticky solid milk units or a compromised shape of the solid milks. Thus, in a preferred embodiment, the solid milk units absorb an amount of water in the range of from 0.3 to 4 mg water per cm², preferably from 0.5 mg to 3 mg per cm², more preferably from 0.7 mg to 2.0 mg/cm² solid milk unit surface area. The presence of the condensed water droplets and water vapour in the humidifying chamber allows the solid milk units to absorb water in a more homogeneous fashion with reduced shadow effects compared to methods where for instance water is sprayed onto the solid milks from a certain angle. The amount of water absorbed by the solid milk units per surface area can be readily established by dividing the increase in weight due to the humidifying step by the outer surface area of the treated solid milk. Under these conditions, the selected shape of the solid milk units is not significantly compromised and said units do not stick to the surface of the substrate on which they are carried or conveyed such that the production process is not hampered thereby.

In an alternatively preferred embodiment, the solid milk units absorb an amount of water in the range of from 5 to 100 mg water per unit, preferably from 10 to 75 mg per unit, more preferably from 15 to 55 mg per unit. In yet another preferred embodiment related to the solid milk unit water uptake, the solid milk units absorb an amount of water in the range of from 0.10 to 2.0 wt%, preferably from 0.2 to 1.50 wt%, more preferably from 0.25 to 1.25 wt%, most preferably 0.25 to 0.45 wt% during humidification. Surprisingly, tablets with sufficient hardness were even obtained when solid milk units were allowed to take up an amount of water below 0.5 wt% relative to the total weight of the unit.

In a preferred embodiment, solid milk units with a mechanical strength of between 10 kPa and 300 kPa and a total weight of between 3 and 8 grams are allowed to take up an amount of water of between 0.5 and 3 mg/cm² solid milk unit surface area.

More advantageously, solid milk units with a mechanical strength of between 10 kPa and 60 kPa are allowed to take up an amount of water of between 10 and 60 mg of water per unit. Solid milk units with a mechanical strength of between 50 kPa and 100 kPa are preferably allowed to take up less water, such as an amount of between 10 and 40 mg of water per unit to prevent that the resulting solid milk tablets become too hard or do not reconstitute within the preferred short time frame.

In a preferred embodiment, the (exposure) temperature of the humid air in the humidifying chamber lies between 60°C and 80°C, more preferably between 65 and 75°C.

In a preferred embodiment, the humid air in the humidifying chamber has a relative humidity of more than 95%, preferably more than 99%, most preferably of a 100%.

In a preferred embodiment, said compressed solid milk units are held at ambient (exposure) pressure conditions in the humidifying chamber. Preferably, ambient pressure herein means a pressure that is equal to pressure encountered at sea level which is about 100 kPa or, when the present method is worked at a different altitude, equal to the prevailing pressure conditions at that location.

The humidifying chamber used in the humidifying step of the present invention is designed such that it can receive compressed solid milk units and has an inlet to allow injection or conveying of humid air comprising condensed water vapour. It is preferably made of a material that can withstand the humidifying conditions of step b) for prolonged periods of time to allow continuous, serial humidification of solid milk tablets in a high-throughput manner. To serve this end, it is preferably made of a metal or a temperature-resistant plastic.

Conveniently, the chamber is operated using a water boiling or water heating device which is in fluid connection with the humidifying chamber. The chamber is preferably operated by passing humid air from the heating/water boiling device to the humidifying chamber, during which passage the temperature of the humid air is allowed to decrease thereby causing water vapour to condense. It is also possible to use the inlet for injecting or conveying humid air which has a relative humidity of more than 95%, such as 98 or 100%, from which no water vapour has condensed yet. In this case condensing occurs mostly or solely upon entry of the humid air in the humidifying chamber due to the lower temperature inside the chamber. From a practical point of view, condensing preferably occurs in the fluid connection between the water heating/boiling device and the humidifying chamber. What is important is that the humidifying chamber provides an environment of high temperature (60-90°C) and high humidity (more than 95% relative humidity supplemented with condensed water vapour) in which the compressed solid milk units can be held and exposed to the preferred temperature and humidity conditions for a preferred humidifying time.

In a preferred embodiment, the humid air comprising condensed water vapour is fed into a humidifying chamber which has two openings for conveying of the solid milk units through the chamber and one opening for injection/conveying or receiving of humid air comprising condensed water vapour. Various other configurations and specific embodiments of the humidifying chamber are possible and include those wherein solid milk units are fed in a batch-wise fashion into a fully closable chamber which, upon receiving a batch of said units, closes in a sealing manner and allows exposure of the solid milk units to the preferred conditions of the invention. In this embodiment, the humidifying chamber can be pressurised or operated at pressure lower than ambient pressure.

In a preferred embodiment, the compressed solid milk units have a temperature of between 4 and 30°C, preferably between 10 and 25°C upon entry of the humidifying chamber in step b). When said units are of the indicated temperature, there is a marked temperature difference between said units and the environment inside the humidifying chamber which promotes condensing of water vapour directly on the surface of the solid milk units. This temperature difference then adds to the fast absorption rate with which the solid milks take-up water from the humid air inside the humidifying chamber.

In a preferred embodiment, the compressed solid milk units are moved, constantly (preferably at a constant speed) or intermittently, through the humidifying chamber. In another embodiment, compressed solid milk units are held still and exposed in a batch-wise manner to the high humidity conditions in the humidifying chamber.

In a preferred embodiment, the method of the present invention is performed in a high-care environment, as further detailed herein below, that includes an air drying system to control the relative humidity in a range of 20 to 60%, more preferably 30 to 50%.

One reason for including a humidifying step in the method of the present invention is to turn dry milk particles comprised by the milk powder that are present in the outer layers of the solid milk units into a transient liquid state such that, after drying, permanent bridges made from milk particles (or a crust) are formed within and between these layers.

### DRYING STEP C)

Step c) comprises drying the humidified compressed solid milk units to obtain compressed solid milk tablets.

The drying step is preferably carried out by infra-red (IR), preferably with the aid of an infra-red tunnel. It is preferable to use infra-red lamps which emit short wavelengths so as to avoid Maillard reaction over the surface of the solid milks.

One aim of the drying step is to obtain a level of moisture of the solid milk tablet which lies within a range of 0.2 % of the initial level of moisture of the starting milk powder material, preferably 0.1 %, more preferably 0.05 %, and or even the same level as the initial moisture level of the starting milk powder material.

During the humidifying step, the level of moisture in the core of the solid milk units remains much closer to the moisture level of the starting dry milk particle material than the outside of the solid milks. To avoid penetration of large amounts of humidity present in the outer layers of the solid milk towards its core, the drying step follows the humidifying step within less than 10 seconds, preferably less than 5 seconds. In a preferred embodiment, the duration of the drying step itself is less than two minutes, more preferably less than 60 seconds or less than 30 seconds, more preferably the drying time is between 10 and 60 seconds.

Under these drying conditions, the solid milks are dried to a shallow depth. Water taken up by the surface and outer layers during the humidification step is thus eliminated within a short time frame. Also, the initial weight of the solid milk before humidifying is restored and the crust is formed permanently, until the solid milk tablets are prepared for use by taking it up in water.

### Additional method steps

In a preferred embodiment, after the drying step, a cooling step may be included in the method of the invention, in which the compressed solid milk tablets are cooled to a temperature below 30°C, preferably comprised between 0°C and 30°C, even more preferably comprised between 15°C and 25°C or ambient temperature. A cooling step may be advantageous in view of reduction of possible stickiness of solid milk tablets which can hamper conveying of the solid milks or packaging thereof since at higher temperatures the fats present in the solid milk tablets may still be fluid to a certain degree. Inclusion of a cooling step is particularly advantageous when solid milk tablets can touch each other when present in a single pack containing more than one tablet.

In a preferred embodiment, the method includes, after the drying step or after the optional cooling step, a packaging step wherein the solid milk tablets are packaged within an air-tight and/or moisture-tight packaging, preferably with a replacement gas to prevent or diminish the possibility of spoilage and occurrence of rancidity. Use of a replacement gas, such as nitrogen and/or carbon dioxide, is envisioned. Carbon dioxide is advantageous as it is partly absorbed by the solid milk tablet thereby creating a slight under pressure after sealing resulting in a vacuum-like appearance.

In a preferred embodiment, the method of the invention is carried out at a production rate which lies between 750 and 2000 solid milk tablets per minute. More in particular, the compression step as well as the subsequent steps (e.g. humidifying, drying, optional cooling and packaging steps) may be performed at a high production rate of at least 750 solid milks per minute, and preferably comprised between 1000 solid milks /minute and 2000 solids/minute.

### COMPRESSED SOLID MILK TABLETS

Furthermore, and as described in more detail below, tablets obtainable by the method of the present invention are disclosed herein. The tablets, in particular the compressed solid milk tablets, obtainable by the method of the present invention are preferably characterized by having one, more or all of the following features: a mechanical strength of between 20 kPa and 1000 kPa, a core/crust structure, wherein the crust comprises or consists of milk particles that are solidified and fused both in parallel and perpendicular planes, relative to the tablet surface and the solid milk tablet has a friability of less than 5%. Preferably, the crust has an average thickness of at least 150 µm or comprised between 150 µm and 2 mm.

Furthermore, said tablets preferably have a surface porosity of between 6 and 22% and a YI E313 white - yellow index of below 40, both determinable with the herein mentioned test method.

Further disclosed herein is a compressed solid milk tablet characterised by having a mechanical strength of between 20 kPa and 1000 kPa, a core/crust structure, wherein the crust comprises or consists of milk particles that are solidified and fused both in parallel and perpendicular planes, relative to the tablet surface and the solid milk tablet has a friability of less than 5%. Preferably, the crust has an average thickness of at least 150 µm or comprised between 150 µm and 2 mm.

Preferably, the solid milk tablets have a mechanical strength of between 20 kPa and 1000 kPa, more preferably between 40 kPa and 800 kPa, even more preferably between 60 and 700 kPa, most preferably between 80 and 600 kPa. Alternatively worded, depending on the surface area used to determine the mechanical strength, the solid milk tablets have a preferred hardness of between 50 N and 400 N, more preferably between 100 N and 300 N, even more preferably between 100 N and 250 N.

In a preferred embodiment, the compressed solid milk units/tablets have a compaction ratio that lies between 0.30 and 0.65, preferably between 0.40 and 0.62, more preferably between 0.47 and 0.60. Solid milk tablets with these compaction ratios are sufficiently hard to withstand transport and handling and still reconstitute well into a ready-to-drink liquid (infant) formula.

In a preferred embodiment, the compressed solid milk units/tablets have a total surface area of between 10 and 50 cm², preferably 15 to 40 cm², more preferably between 18 and 35 cm², most preferably between 20 and 25 cm². Solid milk tablets with a surface area falling in this range are small enough to fit in baby feeding bottles.

In a preferred embodiment, the solid milk units/tablets have a total weight of between 1 and 10 grams, preferably between 2 and 8 grams, more preferably between 4 and 6 grams or about 5 grams. Solid milk tablets with a total weight falling within this range, especially those having a weight of between 4 and 6 gram, can be easily used in preparing baby feeding bottles in replacement of the measuring scoops that are now used. Depending on the exact age of the infant to be fed, a nutritionist can determine (based on existing nutritional directives as set-up by regulatory bodies, such as the internationally accepted CODEX or EU directives on this) the amount of formula that is required to meet the nutritional demands of the infant to be fed and thus the weight of the solid milk tablet as desired.

In a preferred embodiment, the solid milk units/tablets have a total volume of between 2 and 30 cm³, preferably between 4 and 20 cm³, more preferably between 6 and 12 cm³. Solid milk tablets with a volume falling in this range are small enough to fit in baby feeding bottles.

In a preferred embodiment, the solid milk units/tablets have a core the density of which is lower than the density of the crust. In a further preferred embodiment, the average thickness of the crust is at least the thickness of two rows of milk particles as visible in the core of the solid milk tablet or as comprised by the milk powder used for preparing the solid milk tablets. Such an arrangement is advantageous in the sense that the crust of the solid milk provides good friability and protects the internal, more porous and fragile, core from crumbling into small particles again. The same is held for

In a preferred embodiment, the compressed solid milk tablets directly obtained by the method of the present invention are ready-to-use. Preferably, no additional processing steps are required on the compressed solid milk tablets that for instance would change the integrity of the obtained tablets, the physical appearance thereof or their organoleptic properties. In a preferred embodiment, the compressed solid milk tablets are ready-to-use and packaged such that they can be sold to the consumer.

In a preferred embodiment, the solid milk tablets have a core/crust structure. The outside part of the solid milk, including its outside surface, is a crust having the shape of a layer of a significant thickness whereas the inner part enclosed within the crust is considered as the core of the milk tablet. Besides their respective location within the solid milk tablet, the crust and core clearly differ in their physical structure and visual appearance as visualised using scanning electron microscopy performed on the tablet surface and the inside core.

The structure of the crust is mainly continuous in the sense that milk particles are no longer mechanically separated or distinct from each other as they transitioned into a liquid state during humidification, causing melting or merging together of discreet milk particles, and formation of a crust structure that fully envelopes the core part of the tablet in the subsequent drying step. The continuous structure of the surface of the solid milk units however has a certain limited surface porosity, which porosity is visible as holes that fully traverse the crust with a certain spatial interval. Preferably, the crust surface is characterised in that the porosity of the total surface area of the solid milk units lies between 6% and 25%.

The structure of the core is mainly discontinuous and porous in the sense that milk particles are in contact with each other, but with large interstitial empty spaces between them. The milk particles are still discernible as such in the core, having almost the same shape and dimensions as the particles of the initial milk powder has, which is in clear contrast to the structure of the outside crust. Hence, the solid milk tablets can be characterized as having a core which has a density that is lower than the density of the crust.

Further, the crust and the core are both porous, however, in a preferred embodiment, the porosity level of the crust is lower than the level of porosity of the core. In another preferred embodiment, the core is characterised by containing visibly discernible dry milk particles.

According to an aspect, the average thickness of the crust is at least 150 µm, or comprised between 150 µm and 1.5 mm. In a preferred embodiment, the thickness of the crust is comprised between 200 µm and 1,000 µm. In a more preferred embodiment, the thickness of the crust is comprised between 250 µm and 500 µm.

According to an aspect, the average thickness of the crust is at least the thickness of two, three or four rows of milk particles that are visible in the core of the solid milk tablet or as comprised by the milk powder used for preparing the solid milk tablets. For establishing the thickness of milk particles as present in a solid milk tablet, a SEM photograph can be made of the area of the solid milk tablet that is furthest away from any surface area to prevent as much as possible any influence of the humidification step on milk particle appearance. According to embodiment, the crust comprises at least two, at least three or at least four rows of milk particles.

The solid milk tablets display a good reconstitution score as established with the herein mentioned test. Preferably, the solid milk reconstitutes in an aqueous medium having a temperature comprised between 20 °C and 80 °C, within less than one minute, preferably within less than 30 seconds. More preferably, the solid milk tablets display a reconstitution score of 2 or less in the herein mentioned hand-shake reconstitution test.

### Solid milk tablet composition and ingredients

The solid milk tablet preferably comprises protein, carbohydrates and lipids. The solid milk tablets preferably comprise protein in an amount of between 7 and 25 wt%, (digestible) carbohydrates in an amount of between 30 to 70 wt.%, and lipids in an amount of between 10 to 40 wt.%, all relative to the total weight of the solid milk tablet. Preferably the composition of the tablet comprises between 8 to 15 wt% protein, 50 to 65 wt% carbohydrates, and 15 to 30 wt% fat based on the total weight of the tablet.

Preferably the fat provides 30 to 60 % of the total calories, the protein provides 5 to 15% of the total calories and the digestible carbohydrate provides 30 to 60% of the total calories of the composition in the form of a tablet. Preferably the present composition in the form of a tablet comprises lipids that provide 40 to 50% of the total calories, protein that provides 6 to 12% of the total calories and digestible carbohydrates that provide 40 to 60% of the total calories of the composition. The amount of total calories is determined by the sum of calories derived from protein, lipids and digestible carbohydrates.

The present composition in the form of a tablet is a nutritional composition and preferably comprises digestible carbohydrate. Preferred digestible carbohydrates are lactose, glucose, sucrose, fructose, galactose, maltose, starch and maltodextrin. Lactose is the main digestible carbohydrate present in human milk. The present composition in the form of a tablet preferably comprises lactose. The present composition in the form of a tablet preferably comprises 30 to 70 wt.%, more preferably 40 to 65 wt.% digestible carbohydrates. The present nutritional composition in the form of a tablet preferably comprises digestible carbohydrate, wherein at least 35 wt.%, more preferably at least 50 wt.%, more preferably at least 70 wt.%, of the digestible carbohydrate is lactose. The present composition in the form of a tablet preferably comprises at least 30 wt.% lactose, preferably at least 40 wt.%. Based on total calories the composition preferably comprises 30 to 60 % calories derived from digestible carbohydrates, more preferably 40 to 60 %.

Preferably, the composition is substantially free of artificial sweeteners or artificial flavour additives, such as xylitol, polydextrose and the like, as such ingredients are not considered suitable by regulatory bodies for consumption by human infants.

The present composition in the form of a tablet comprises fat. Preferably the fat of the present composition in the form of a tablet provides 35 to 60 % of the total calories of the composition, preferably the fat provides 40 to 50% of the total calories. The present composition in the form of a tablet preferably comprises 10 to 40 wt.%, preferably 12.5 to 30 wt.% fat, more preferably 15 to 25 wt.% or more preferably 19 to 25 wt.%.

Preferably the fat comprises the essential fatty acids alpha-linolenic acid (ALA), linoleic acid (LA) and/or long chain polyunsaturated fatty acids (LC-PUFA, meaning 20 or 22 carbon atoms). The LC-PUFA, LA and/or ALA may be provided as free fatty acids, in triglyceride form, in diglyceride form, in monoglyceride form, in phospholipid form, or as a mixture of one of more of the above. Preferably the present composition in the form of a tablet comprises at least one, preferably at least two lipid sources selected from the group consisting of rape seed oil (such as colza oil, low erucic acid rape seed oil and canola oil), high oleic sunflower oil, high oleic safflower oil, olive oil, marine oils, microbial oils, coconut oil, palm kernel oil and milk fat.

Preferably, the solid milk tablet comprises n-3 LC-PUFAs in an amount of not more than 4 wt.% of the total fat content, more preferably not more than 2 or even not more than 1 wt.%. Preferably, the solid milk tablet comprises n-6 LC-PUFAs in an amount of not more than 8 wt.% of the total fat content, more preferably not more than 6 or even not more than 2 wt.%. Also, the eicosapentaenoic acid (EPA, 20:5 n-3) content preferably does not exceed that of the docosahexaenoic (DHA, 22:6 n-3) acid content of the solid milk tablet. Preferably, also the DHA content shall not exceed that of total n-6 LC-PUFA levels of the solid milk tablet.

The present composition in the form of a tablet preferably comprises other components, such as vitamins, minerals, trace elements and other micronutrients in order to make it a complete nutritional composition. Preferably the composition in the form of a tablet is selected from the group consisting of an infant formula, follow on formula, toddler milk or toddler formula and growing up milk, more preferably form the group consisting of an infant formula and follow on formula. Infant and follow on formulae comprise vitamins, minerals, trace elements and other micronutrients according to international directives.

Preferably, the carbohydrate also comprises non-digestible carbohydrates, also referred to as non-digestible oligosaccharides in the context of the present disclosure. Preferably the present composition comprises non-digestible oligosaccharides with a degree of polymerization (DP) of 2 to 250, more preferably 3 to 60. Preferably, the total amount of non-digestible oligosaccharides as present in the solid milk tablets lies between 1 wt.% to 5 wt.% of the solid milk tablets weight. Preferably the non-digestible oligosaccharide comprises at least one oligosaccharide selected from the group of fructo-oligosaccharides (such as inulin), galacto-oligosaccharides (such as transgalacto-oligosaccharides or beta-galacto-oligisaccharides), gluco-oligosaccharides (such as gentio-, nigero- and cyclodextrin-oligosaccharides), arabino-oligosaccharides, mannanoligosaccharides, xylo-oligosaccharides, fuco-oligosaccharides, arabinogalacto-oligosaccharides, glucomanno-oligosaccharides, galactomanno-oligosaccharides, sialic acid oligosaccharides and uronic acid oligosaccharides, more preferably selected from the group of fructo-oligosaccharides, galacto-oligosaccharides and uronic acid oligosaccharides, most preferably selected from the group of fructo-oligosaccharides, galacto-oligosaccharides. Preferably, the nutritional composition comprises galacto-oligosaccharides, more preferably transgalacto-oligosaccharides. In a preferred embodiment the composition comprises a mixture of galacto-oligosaccharides and fructo-oligosaccharides. Herein, lactose is not intended to be included within the term non-digestible oligosaccharide.

The galacto-oligosaccharides preferably have a DP of 2 to 10. Preferably the galactooligosaccharides have an average DP of below 6. The galacto-oligosaccharide is preferably selected from the group consisting of transgalacto-oligosaccharides, lacto-N-tetraose (LNT), lacto-N-neotetraose (neo-LNT), fucosyl-lactose, fucosylated LNT and fucosylated neo-LNT. Transgalacto-oligosaccharides (TOS) are for example sold under the trademark Vivinal™ (Borculo Domo Ingredients, Netherlands). Preferably the saccharides of the transgalactooligosaccharides are β-linked. The fructo-oligosaccharide preferably have a DP 5 of 2 to 250, more preferably 2 to 100, most preferably 5 to 60. Preferably the fructo-oligosaccharides have an average DP of above 10. Fructo-oligosaccharides include inulin, levan and/or a mixed type of polyfructan. An especially preferred fructo-oligosaccharide is inulin. Fructo-oligosaccharide suitable for use in the compositions is commercially available, e.g. as Raftiline®HP (Orafti). Preferably, the present nutritional composition comprises galacto-oligosaccharides and fructooligosaccharides in a weight ratio galacto-oligosaccharides : fructo-oligosaccharides of 99 : 1 to 1 : 99, more preferably 20 : 1 to 1 : 1, most preferably 12 : 1 to 7 : 1.

### MODULAR SYSTEM

The present invention furthermore relates to a modular system for carrying out the method of the present invention. The modular system of the present invention comprises:
- a device for compressing milk powder to obtain compressed solid milk units with a mechanical strength of between 10kPa and 300kPa,
- a humidifying system including a humidifying chamber for humidifying compressed solid milk units and means for producing a humid environment in the humidifying chamber, said environment comprising a relative humidity of more than 95%, a temperature of between 60 and 90°C and condensed water droplets,
- a drying device for drying the humidified and compressed solid milk units, and
- means for conveying or providing solid milk units from the compression device to the humidifying system and subsequently to the drying device for drying.

In a preferred embodiment, the humidifying chamber and means for producing the humid environment, preferably a water boiling device, are in fluid connection allowing humid air to be passed from said means to the humidifying chamber. Preferably, the fluid connection is air-tight to prevent escape of humid air from the modular system in an undesired manner.

In a preferred embodiment, the solid milk units are conveyed to and preferably through the humidifying chamber, preferably using a conveyor belt. One or a multitude of conveyor belts can be used for moving the solid milks from the compression device to the humidifying chamber and subsequent moving of the solid milks from the humidifying chamber to the drying device. Operating the modular system with the conveyor belt reduces the need to contact the milk units by hand or the use of devices for handling the solid milk units during processing which allows operating in a more hygienic manner. Also, use of a conveyor belt implies the solid milks are stationary in relation to the position on the belt and are thus in contact with only one surface instead of being in contact with multiple devices or more equipment than necessary. This is relevant in view of reduction of microbiological spoilage/contaminations.

Preferably, the modular system further comprises a packaging device for packaging the (ready-to-use) solid milk tablets in a sealed package. The sealed package is preferably air-tight and/or moisture tight and filled with a replacement gas to replace the oxygen-containing atmosphere, such as carbon dioxide and/or nitrogen. In case the modular system is placed in a high-care zone (see below), the risk of introducing microbial contamination or foreign objects in the sealed package containing the solid milks is further reduced.

In a preferred embodiment, the modular system is placed in a high-care environment or high-care zone. High-care in this context refers to an environment or zone wherein measures are taken to reduce the risk of microbial contamination and/or the introduction of foreign objects in the solid milk tablets. In a preferred embodiment, the measures to achieve a high-care are selected from the group consisting of an air-filtration system, such as HEPA filters, a temperature-control system to ensure the temperature can be controlled in a range of 10 to 30°C, preferably 15 to 25°C, an air drying system to control the relative humidity in a range of 20 to 60%, more preferably 30 to 50% and a system for maintaining overpressure.

In a preferred embodiment, the water used in the humidifying step is sterile and/or demineralised water.

In a further preferred embodiment, the modular system further includes a device that allows qualitative inspection of the contents of the package containing the solid milk tablets. Preferred is an X-ray machine allowing visual and, if desirable, automated recognition of foreign objects inside the package.

The humidifying chamber used in the humidifying step of the present invention is designed such that it can receive compressed solid milk units and has an inlet to allow injection or conveying of humid air comprising condensed water vapour therein. It is preferably made of a material that can withstand the humidifying conditions of step b) for prolonged periods of time to allow continuous, serial humidification of solid milk tablets in a high-throughput manner. To serve this end, it is preferably made of a metal or a high temperature-resistant plastic.

In a preferred embodiment, the humid air comprising condensed water vapour is fed into a humidifying chamber which has two openings for conveying of the solid milk units through the chamber and one opening for injection/conveying or receiving of humid air comprising condensed water vapour. Various other configurations and specific embodiments of the humidifying chamber are possible and include those wherein solid milk units are fed in a batch-wise fashion into a fully closable chamber which, upon receiving a batch of said units, closes in a sealing manner and allows exposure of the solid milk units to the preferred conditions of the invention. In this embodiment, the humidifying chamber can be pressurised or operated at pressure lower than ambient pressure.

In a preferred embodiment, the drying device comprises infra-red lamps to obtain a drying temperature of between 90 and 180°C and a relative humidity of between 20 and 60 RH%, preferably 30 to 50 RH%.

### Definitions

The invention must be understood in the light of the following terms and definitions.

"Hardness" (F) of solid milks as meant herein is the force applied on the surface thereof at which a unit fractures, expressed in Newton. Preferably, the solid milk unit is placed in an 8M DR. SCHLEUNIGER hardness meter (PHARMATRON®) and operated with standard factory settings according to the manufacturer's instructions to establish the hardness of the tablets. The force is applied in a direction that is perpendicular to the compression direction, on two opposite flat surfaces. In case of a rectangular, non-cubical, solid milk, the force is applied over the longest distance of two flat surfaces.

"Mechanical strength" (MS) reflects the hardness of solid milks, calculated by the ratio 2F/S where F is the hardness which is determined as mentioned above and S the area of the solid milk on to which the force F is applied, expressed in kPa. The hardness F is converted into pressure so as to be independent of the contact surface to which the force was applied. For a cylindrical unit, for example, the pressure at fracture or mechanical strength expressed in kPa is equal to twice the fracturing force F expressed in N divided by the involved crown surface area of the cylinder expressed in mm².

"Milk powder", as used herein, means a milk-based powderous composition that is used in the compression step of the present invention to obtain compressed solid milk units and compressed solid milk tablets. Said milk powder can be obtained by (spray-) drying of liquid milk, such as fresh milk, skimmed milk, semi-skimmed milk, bovine milk, preferably bovine or cow's milk. During industrial processing of liquid milk into milk powder intended for human consumption, suitable macro- (protein, carbohydrates and fats) and micronutrients (e.g. vitamins and minerals) are added or removed in levels that depend on the intended use. In a preferred embodiment, the liquid milk is processed into milk powder intended for consumption by human infants. In a preferred embodiment, the solid milk units or tablets are prepared from commercially available (dry) infant milk formula using the method of the present invention.

"Infant milk formula" herein means a milk formula that is suitable for providing the daily nutritional requirements to a human with an age below 36 months, particularly an infant with the age below 24 months, even more preferably an infant with the age below 18 months, most preferably below 12 months of age. Particular reference is herein made to EU directive 2006/141/EC which is meant to regulate the ingredients of (and their levels) infant milk formulae where necessary. The compositions preferably comprise all macro- and micronutrients, such as vitamins and minerals, according to said international directive for infant milks.

"Average size" in relationship to milk particles, means the equivalent diameter of the milk particles for which the value of the cumulative distribution is 50%, usually called diameter d50. The size of powder can be determined by means of a laser particle size analyser.

The term "reconstitution" herein means to take up solid milk tablets in an amount of water or another suitable liquid in a predetermined ratio to obtain a ready-to-drink liquid formula. Reconstitution includes disintegration of solid milk tablets in a liquid followed by dissolution thereof in the liquid medium. Reconstitution properties of the tablets are determined by the herein mentioned standardised hand-shaking test.

Solid milk "unit" and solid milk "tablet" are herein only used to differentiate between solid milks that have undergone different processing steps of the present method. The first term refers to solid milks that have been compressed and humidified in steps a) and b), whereas the latter refers to solid milks that have also been dried in step c) and are ready for packaging and use by the consumer. Both solid milk unit and tablet refer to a compacted or compressed solid milk form that can have any suitable shape. The solid milks are limited by an outside surface and are generally provided as tablets, pellets, balls or pills. Depending on the shape of the die wherein the milk powder is compressed, the solid milk may have any suitable shape, such as a cubical shape with (substantially) equal height, width and depth, or more typically have a rectangular shape with (substantially) equal width and depth but different height, block or brick shape with different width, depth and height or cylindrical or spherical shape.

"Crust" in relationship to the solid milk, means the outside part - including the outside surface - of the solid milk, having the shape of a layer of a significant thickness. The structure of said crust is such that it has a limited porosity and is mainly continuous in the sense that the milk particles or agglomerates thereof are no longer mechanically substantially separated from each other and are not identifiable as discreet, individual particles but have become fused/melted together into a solid layer.

By examining scanning electron microscopy photographs of the surface of the compacted solid milk units, it can be deduced that subjecting the compressed solid milk units to the humidifying and drying steps according to the present invention, causes the outer positioned layers of particles of said units to take up an amount of water which is sufficient to (partly) dissolve or hydrate said outer particle layers such that fluid milk particles amalgamate, resulting in fusions in planes that run parallel and perpendicular to the solid milk surface, such as into a layer of an average thickness that corresponds to the size of at least two milk particles. The subsequent drying step fixes or secures the configuration of the fused outer layers into a solid, dried crust.

"Core" in relationship to the solid milk, means the inner part of the solid milk enclosed within the crust, the structure of such core being mainly discontinuous (meaning porous/less dense) in the sense that the milk particles, or agglomerates thereof, are touching each other, leaving empty spaces between them. In contrast to the crust, the core of the compressed solid milk units does not exhibit any clear signs of having been exposed to water vapour and does not show any clear signs that solid milk particles have been fused or bridged to each other as observed for the crust.

The crust and core are separated by an interface, which is a line or the medium line of a transition zone between a mainly continuous structure (crust) and a mainly discontinuous structure (core), where, respectively, the different milk particles or agglomerates thereof cannot be visually clearly identified and, on the contrary, are visually clearly identified on a SEM picture of a fracture or cut of the solid milks. So, on the image of a fracture it is possible to draw two parallel lines that run perpendicular to the outside tablet surface: an outside average limit line of the crust at the outside surface of the solid milk and an inside average limit line where the solid, merged nature of the crust visibly transitions into individually recognizable milk particles. The distance between these two lines defines the thickness of the crust. The average thickness of the crust means the average value of the local thickness of the crust in ten different points distributed by chance on the outside surface of the crust. It is expressed in micrometer (µm) or millimeter (mm).

"Row of milk particles" means an arrangement of milk particles next to each other along a line that runs, on average, parallel to the surface of the tablet after compaction of a dry milk powder. A thickness of two rows of milk particles refers to a thickness that corresponds to twice the average size of the milk particles comprised by the dry milk powder used in the compression step.

"Compression speed" means the movement speed of the movable compressing punches, i.e. the ratio displacement distance of said punches / compression duration. It is expressed in 10 mm/s.

"Compaction pressure" means the pressure applied to the milk powder being into the die to compress it. Such compaction pressure is expressed in MPa.

"Compaction ratio" means a compaction ratio of compressed solid milks which ratio is calculated in accordance with the following formula: Compaction ratio = (apparent density of the solid milk/true density of the milk powder), wherein the true density of milk powder is set at 1.25 g/ml.

"Friability percentage" as meant herein is calculated by the following equation: (initial mass of the solids - mass of the solids after the test)/initial mass of the solids x 100% and determined according to the friability test method according to Example 5.

"Surface porosity" herein is defined as the percentage continuous versus discontinuous surface of the crust and is determined using the method as disclosed in Example 6. For example, a surface porosity of 10% means that 90% of the surface area of a solid milk unit is occupied by the fused solid milk particles and 10% of the surface area is constituted by pores or hole.

"Moisture level" or "level of moisture" in relationship to milk powder or solid milk, is expressed as a ratio and calculated as the weight of water in the powder or solid milk / weight of total mass of powder + water or solid milk + water. It is expressed as a percentage (%).

"Humid air comprising condensed water vapour" as used herein refers to air having a relative humidity of more than 95% or preferably more than 98%, most preferably more than 99% or 100%, that further contains water droplets that are formed when (gaseous) water vapour transitions into liquid water due to condensing out when the humid air is brought to a lower temperature. Preferably, this humid air is generated by boiling or holding water at a temperature ("generation temperature") which is elevated with respect to the temperature to which said solid milk units are exposed ("exposure temperature"). Lowering of the generation temperature to the exposure temperature causes water vapour to condense out thereby yielding humid air comprising condensed water vapour.

The term "about" as used herein is to be construed as a deviation of the indicated value of 5%.

### Description of the figures

Figure 1 shows a SEM picture of the surface of a solid milk tablet with surface porosity of 10%.
Figure 2 shows a SEM picture of the surface of a solid milk tablet with surface porosity of 15%.

### Examples

### Example 1: Compressing of dry milk particles to provide solid milk units with predetermined hardness

Dry milk powders of three representative nutritional formulations for feeding infants with the following characteristics were used to test tabletting behaviour and setting up calibration curves. Besides these macronutrients, suitable levels of vitamins and minerals were present as well. The size of powder can be determined by means of a laser diffraction particle size analyser (Malvern Mastersizer 2000 with Scirocco 2000 dry powder dispenser).

**Table 1. Characteristics of three different recipes of dry milk particles.**

| Batch | P | F | C | M | BD | Particle size distribution* | | | | |
|---|---|---|---|---|---|---|---|---|---|---|
| | | | | | | <150 | >150 | >250 | >400 | >600 |
| A | 9.3 | 20.8 | 40.8 | 2.62 | 0.51 | 3 | 27 | 40 | 22 | 8 |
| B | 9.4 | 24.0 | 36.6 | 2.10 | 0.56 | 8 | 31 | 37 | 15 | 9 |
| C | 10.7 | 20.6 | 39.3 | 2.13 | 0.58 | 2 | 11 | 54 | 25 | 8 |

| | | | | | | | | | | |
|---|---|---|---|---|---|---|---|---|---|---|
| P = protein content in wt%, F = Fat content in wt%, C = carbohydrate content in wt%, M = moisture content in wt%, BD = bulk density in g/cm³. * Particle size distribution is given as fraction of the total amount of particles (expressed in vol%) in a certain particle diameter class (expressed in µm). | | | | | | | | | | |

Compression was achieved using a rotary press (Eurotab Technologies, France) by compressing between 4.8 and 5.0 gram dry infant milk powder to obtain solid milk units with varying compaction ratios and hardness/mechanical strength. The dimensions of the units as obtained were 25 x 25 mm due to the dimension of the compression die. The height of the tablets is slightly variable (ranging between 9 and 13 mm) due to the selected compression pressure of between 1 and 40 MPa as exerted on the dry milk powder. The height of tablets of preferred hardness/mechanical strength was 10-12 mm.

Hardness of the tablets was determined using an 8M DR. SCHLEUNIGER® hardness tester as mentioned herein according to the manufacturer's instructions. Mechanical strength (in kPa) and compaction ratios were calculated according to the terms and definitions as mentioned above. To obtain statistically significant results and unless indicated otherwise, the hardness of a total of at least 20 tablets was determined for each batch of tablets made.

**Table 2. Observed hardness (in N), mechanical strength (in kPa) and compaction ratios (CR) of three representative dry infant milk powder recipes at varying compaction heights of a standardized amount of compressed dry milk powder.**

| Recipe A | | | | |
|---|---|---|---|---|
| Hardness (N) | MS (kPa) | Height (mm) | Weight (g) | CR |
| 13 | 21 | 12.62 | 4.95 | 0.50 |
| 29 | 48 | 11.97 | 4.93 | 0.53 |
| 38 | 65 | 11.73 | 4.93 | 0.54 |
| 57 | 100 | 1142 | 4.98 | 0.56 |
| 72 | 130 | 11.04 | 4.95 | 0.57 |
| 106 | 202 | 10.50 | 4.88 | 0.59 |
| | | | | |

| Recipe B | | | | |
|---|---|---|---|---|
| Hardness (N) | MS (kPa) | Height (mm) | Weight (g) | CR |
| 11 | 18 | 12.15 | 4.91 | 0.52 |
| 27 | 46 | 11.65 | 4.95 | 0.54 |
| 45 | 81 | 11.05 | 4.90 | 0.57 |
| 61 | 112 | 10.87 | 4.95 | 0.58 |
| 103 | 22 | 10.30 | 4.94 | 0.61 |
| 153 | 310 | 9.87 | 4.91 | 0.64 |
| | | | | |

| Recipe C | | | | |
|---|---|---|---|---|
| Hardness (N) | MS (kPa) | Height (mm) | Weight (g) | CR |
| 9 | 15 | 11.76 | 4.93 | 0.54 |
| 18 | 32 | 11.34 | 4.92 | 0.56 |
| 44 | 82 | 10.79 | 4.99 | 0.59 |
| 79 | 154 | 10.27 | 4.96 | 0.62 |
| 122 | 248 | 9.82 | 4.94 | 0.64 |
| 9 | 15 | 11.76 | 4.93 | 0.54 |

| | | | | |
|---|---|---|---|---|
| MS = Mechanical Strength (expressed in kPa), CR = Compaction Ratio, N = Newton. | | | | |

Using incremental compression settings, calibration curves were readily obtained for all three recipes to be able to obtain solid milk units with mechanical strengths that ranged from about 10 kPa to about 300 kPa. As can be seen from the results in **Table 2,** some variation in the correlation between compression ratio and resulting mechanical strength was observed per powder batch. However, within batch variations were not significant and solid milk units of predictable and consistent mechanical strength could be obtained from a single powder batch by use of a single, straightforward calibration curve. Since dry milk powers are typically produced in large batches of easily 1000 kg, it is very convenient for the skilled person to preselect the desired solid milk unit hardness/mechanical strength by use of a single compression test using incremental compression settings. Conveniently, any observed variation in the resulting mechanical strength of different dry milk powder recipes or production batches could be corrected by selecting the appropriate compression setting. This allows production of compressed solid milk units with a preselected mechanical strength value/ hardness that can subsequently be humidified and dried.

### Example 2: Moistening and drying of compacted milk units with preselected hardness

Compressed solid milk units obtained by the method of Example 1 were conveyed with a conveyor belt from the rotary press through a humidifying chamber with a calculated volume of 7430 cm³. The humidifying chamber is open by two slits of 3 cm x 12 cm that are present at the opposite sides from the two vertical, planar walls of the chamber to allow the tablets to traverse the chamber on the conveyor belt. The solid units were horizontally conveyed over a humidifying distance of 22.5 cm through the humidifying chamber after which the humidified solid milk units were conveyed through a drying chamber in which infra-red lamps were present for drying of the solid milks. The humidifying chamber was cylindrically shaped and positioned on its side, meaning the two opposite planar walls of the cylinder are positioned in an upright, vertical manner.

The weight increase of the units as a function of conveying speed through the humidifying chamber due to the absorbance of moisture was determined by conveying said units at pre-selected speeds through the humidifying chamber and deducting the weight of the non-humidified unit from the weight of the humidified unit. The amount of absorbed water by the tablets equates to a time spent in the humidified chamber which was controlled by the speed of the conveyor belt. This allows the use of a preselected conveyor belt speed to control water absorption by the units.

A pressurised boiler (Vaporettino LUX by Polti® S.p.A., Italy) was used for production of humid air comprising condensed water vapour for feeding into the humidifying chamber and operated according to the manufacturer's instructions. Before any humid air comprising condensed water vapour was fed into the humidifying chamber from the boiler, the device was fully heated up indicated by the "steam ready" indicator. Under these operating conditions, it could be felt that the water inside the pressurised boiler was boiling at the 3 bar capacity of the device. Humid air comprising condensed water vapour was constantly fed into the humidifying chamber from the device through the included flex (*i.e.* a hose). The humidifying chamber was equilibrated by feeding humid air comprising condensed water vapour into the chamber for an initial 15 to 30 minute time period during which the temperature in the chamber stabilised at around 70-72°C and after which humid air with condensed water vapour continuously and visibly escaped from the chamber.

Performance of the humidifying chamber and repeatability of the obtained results was investigated by conveying eight different batches of 20 tablets each through said chamber. An average of 40.65 mg water was absorbed by the tablets at a belt speed of 3.5 m/min. With a standard deviation of 1.31 mg water, it was considered that the humidifying chamber provides good performance and provides repeatable results. It was concluded that the humidifying chamber provides a robust means to add a controlled and consistent amount of water to the compressed solid milks. Similar results were obtained using a humidification chamber with an increased length which was operated at a corresponding, increased conveyor belt speed (results not shown).

By changing the speed of the conveyor belt, the amount of water absorbed by the unit can thus be readily controlled using this set-up. Different conveyor speeds were tested and it was found that absorption levels of between 15 to 55 mg water per unit could be achieved that resulted in suitable solid milk tablets. By taking the dimensions of the tablets into account, the total amount of absorbed water was calculated per cm² solid unit surface area.

The drying step was executed by immediately conveying solid milk tablets from the humidification chamber through a tunnel which was equipped with eight 2 kW IR lamps that were positioned such that homogeneous drying over all faces of the solid milks was achieved. The drying time needed to restore to the initial moisture levels of the solid milk before moistening was between about 10 and 60 seconds.

### Example 3: Effect of water/moisture absorption on hardness/mechanical strength increase.

Solid milk units with a hardness ranging between 20N and 50N were obtained according to the method of Example 1. These units were humidified using the set-up as described in Example 2 to allow the units to absorb an amount of water as indicated in **Table 3** which is between 20 and 50 mg per unit.

**Table 3. Increase of hardness after humidifying and drying.**

| Water addition | H.A.P. (kPa/N) | H.A.D. (kPa/N) | Water addition | H.A.P. (kPa/N) | H.A.D. (kPa/N) |
|---|---|---|---|---|---|
| 20 mg | 33/19 | 108/62 | 20 mg | 77/40 | 193/101 |
| 30 mg | 33/19 | 145/83 | 30 mg | 77/40 | 277/145 |
| 40 mg | 35/20 | 221/125 | 40 mg | 74/39 | 415/215 |
| 50 mg | 28/16 | 309/172 | 50 mg | 79/41 | 664/340 |
| 20 mg | 56/30 | 152/82 | 20 mg | 103/53 | 234/121 |
| 30 mg | 55/29 | 203/108 | 30 mg | 96/48 | 339/171 |
| 40 mg | 51/27 | 262/139 | 40 mg | 92/48 | 381/199 |
| 50 mg | 54/29 | 510/269 | 50 mg | 90/46 | 688/348 |

| | | | | | |
|---|---|---|---|---|---|
| H.A.P.= Hardness after press means the hardness (in N) or mechanical strength (MS) of solid milks that were not yet subjected to moistening and drying. H.A.D. = Hardness after drying which means the hardness (in N) of tablets that have been moistened and dried. Corresponding mechanical strength values were calculated from the hardness values with the equation 2F/S, as described in detail above. | | | | | |

As can be seen in **Table 3,** it was surprisingly found that a correlation appears to be present in the sense that under the tested conditions the hardness increase from H.A.P. to H.A.D. with 20 mg water addition is 2.5 to 3 fold, with 30 mg about 4 fold, with 40 mg about 5 fold and with 50 mg about 9 fold.

The hardness/mechanical strength of the obtained tablets was scored as good. Both the observed HAP and HAD scores are considered to be more than suitable for purposes of both handling during manufacturing and transport of tablets to the consumer, respectively. Notably, solid milk tablets that absorbed 20 mg water (which equates to less than 0.5 wt% of the solid milk tablet) displayed good hardness/mechanical strength scores, especially with higher preselected H.A.P. settings.

### Example 4: Shelf-life properties of the solid milk tablets as produced

Both hardness evolution and reconstitution behaviour was assessed over time of solid milk tablets produced with the present method. In particular, the shelf-life of tablets with a HAP value of about 30N (27-30N) and about 50N (46N-53N) that received about 20, 30, 40 or 50 mg water was tested.

Hardness/mechanical strength was determined as mentioned in Example 1. Hardness/mechanical strength of solid milk tablets was assessed over time to gain insight in the shelf-life properties of the solid milk tablets. To ensure a proper shelf-life assessment that closely reflects the real-life consumer situation, solid milk tablets were immediately packed after production in a sealed, air-tight package containing inert gas and stored under ambient temperature conditions. The thus packaged solid milk tablets were stored for 1, 3 and 6 months. The tablets were taken out of their protective environment by breaking the seal after which hardness values were determined. Hardness/mechanical strength values for the tested tablets did not change in a statistically significant manner over the indicated time-period.

Reconstitution behaviour was assessed by a standardized method that represents the consumer's way of preparing a ready-to-feed baby bottle. To this end, 6 solid milk tablets of the indicated HAP value and water addition as mentioned were placed in a baby bottle with 180 mL of water of 40°C followed by standardized manual shaking performed by a single subject for 30 s. After 30 s of shaking the content of the baby bottle was poured into a sieve of which the meshes measured 630 µm. The presence of lumps was visually assessed. The estimation of the reconstitution score was determined by a visual assessment, taking into account the size of the remaining lumps. In the absence of lumps, the reconstitution score was 0. With the presence of lumps, a reconstitution score from 1 to 10 was awarded depending on the size of the lumps observed on the sieve. The score 10 corresponds to the fact that almost all the solid milks are retained on the sieve. The larger the lumps and the closer they are to the initial size of the solid, the higher the score. Reconstitution is acceptable if the score is less than or equal to 2. Obviously, a score of 1 or even 0 is more preferred.

Reconstitution behaviour of the stored tablets was determined using above mentioned hand-shaker method at 40°C. The solid milk tablets mentioned in **Table 3** with a HAP value of about 30N (27-30N) that displayed a HAD value of between 82 and 269N, all exhibited a better than acceptable reconstitution value of 0 or 1 for tablets stored for up to 6 months. Reconstitution behaviour of these solid milk tablets was also determined after a short storage period of a week or less and found to range between 0 and 1.

The solid milks mentioned in **Table 3** with a HAP value of about 50N (46-53N) and that displayed a HAD value of between 121 and 348N, all exhibited an acceptable reconstitution value of 1 or 2 for tablets stored for up to 6 months. Reconstitution behaviour of these solid milk tablets was also determined after a short storage period of a week or less and found to range between 0 and 2.

Similar reconstitution results were found for solid milks of **Table 3** with HAP values of about 20N (16-19N) and about 40N (39-41N) that were stored for a period of three months. Reconstitution behaviour of such tablets stored for a week or up to three months was all scored with 0-1.

In conclusion, even after a prolonged storage period, all tested solid milk tablets still displayed acceptable and/or even good reconstitution behaviour, indicating the solid milk tablets obtained according to the present invention are sufficiently shelf-stable over the tested time period. Also, reconstitution behaviour did not significantly increase over the indicated time period.

### Example 5: Friability measurements on solid milk tablets

The solid milk tablets of **Table 3** were tested for their friability. To this end, seven tablets were placed on an AS200 sieve shaker (Retsch) equipped with a 600 µm sieve with a 200 mm diameter and 50 mm height (Retsch) and vibrated thereon for a selected time period. The weight of the tablets was determined on the sieve after selected shaking time intervals.

The method was carried out as follows: weighing of the empty sieve, placing of seven tablets on the sieve, weighing the total of the sieve with the tablets, placing the sieve on an aluminium pan with a 200 mm diameter (Retsch) and into the sieve shaker, clamping the lid on top of the pan sieve stack which consisted of the sieve and aluminium pan, setting the sieve shaker amplitude to 1.0 mm/"g" and a time of 2 minutes. After the machine finished shaking, the sieve with the tablets was weighted. At this time point, the fraction of powder that had come of the tablets was determined using the following equation: (initial mass of the solids - mass of the solids after the test)/initial mass of the solids x 100%.

### Results

Solid milk tablets of **Table 3** with a preselected hardness after press (20N, 30N, 40N or 50N) to which a preselected amount of moisture was added (20mg, 30mg, 40mg or 50mg) were tested with the above-mentioned friability test method. From the results presented, it is clear that all tested tablets have a friability that lies below 5% under these test conditions. Friability results of the tablets to which 30mg and 40mg water was added are not shown but give values that are intermediate with respect to the 20mg and 50mg tablets.

A range of representative solid milk tablets obtained by the method as mentioned in WO2012/1099472 A1 were tested for friability with the herein mentioned method. These tablets had a friability score of between 10.5% and 21.2%.

**Table 4. Friability measurements of a representative set of solid milk tablets**

| Sample | Friability (%) | Sample | Friability (%) |
|---|---|---|---|
| 20N/20mg | 3.4 | 40N/20mg | 1.5 |
| 20N/50mg | 0.2 | 40N/50mg | 0.1 |
| 30N/20mg | 1.6 | 50N/20mg | 0.6 |
| 3 0N/50mg | 0.2 | 5 0N/50mg | 0.1 |

| | | | |
|---|---|---|---|
| Note: Sample 20 N/20 mg, for instance, refers to a solid milk tablet that has been produced with a compression ratio that yields a solid milk unit with a H.A.P. value of about 20 N which absorbed an amount of 20 mg water during the humidification step. | | | |

Friability is an important characteristic of milk tablets since it is desirable to produce solid milk tablets that are still intact at the time the consumer wishes to use them for preparing liquid infant formula. It is not only unattractive for the consumer to open a package of tablets and finding a layer of powdered milk inside the packaging, but use of friable tablets may also lead to under-feeding of an infant since the prescribed amount of infant formula would not be used. It is considered that a friability level of less than 5% in the herein given test is more than an acceptable score that allows tablets to arrive at the consumer in a proper state without too much worn-off powder being present on the bottom of the package. Notably, solid milk tablets that absorbed 20 mg water (which equates to less than 0.5 wt% of the solid milk tablet) displayed very good friability scores, especially with higher preselected HAP settings.

In conclusion, hardness/mechanical strength as well as friability, reconstitution and tablet shelf-life were all considered to be good for the solid milk tablets obtained via the method of the present invention.

### Example 6: SEMpictures and surface porosity

When tablets are made from infant milk formulae total porosity thereof can be measured by determining the apparent density and the real density (such as by using a stereopyncometer). In an attempt to better explain tablet reconstitution, surface porosity of the solid milk units was determined. Said method will give a value for the amount of surface pores were water can easily penetrate and thus promote reconstitution of a tablet. Briefly, the method involves making scanning electron microscope pictures of a tablet surface and calculating the percentage of pore openings in the tablet surface.

The outer surface of solid milk tablets mentioned in **Table 3** were prepared for SEM analysis by carefully cutting tablets in pieces and selecting suitable tablet crust parts for analysis of the outer surface thereof. Crust parts were stuck to a suitable SEM stub and gold coated to allow for SEM imaging using a SEM JEOL JSM-5610. Sharp SEM pictures of good quality were obtained using a 70x magnification. The obtained pictures were saved in a TIFF file format for further software processing.

For further software processing, the ImageJ software suite 1.46R (freeware made available by the National Institute of Health of the USA) was used as follows. Appropriate tablet surface images were loaded in ImageJ. Under "Image" the threshold was adjusted in such a way that pores and solid tablet surface were clearly separated. Under "Analyze", "Measure" was chosen after which a resulting tablet is shown in a binary, black and white image. After that, the area value was recorded which represents the percentage of pores of the analysed surface, i.e. surface porosity (in %).

Using this procedure, a clear and reproducible distinction could be made between surface pores (holes, represented by black regions) and the solidified surface of the tablets (represented by white regions). The results show that the solid milk tablets obtained by the method of the present invention have a surface porosity of between 6% and 21%.

**Table 5. Surface porosity data.**

| Amount of water added | Hardness After Press | | | |
|---|---|---|---|---|
| | 20 N | 30 N | 40 N | 50 N |
| 20 mg | 17 | 15 | 21 | 17 |
| 30 mg | 15 | 15 | 13 | 12 |
| 40 mg | 10 | 13 | 6 | 10 |
| 50 mg | 11 | 8 | 6 | 7 |

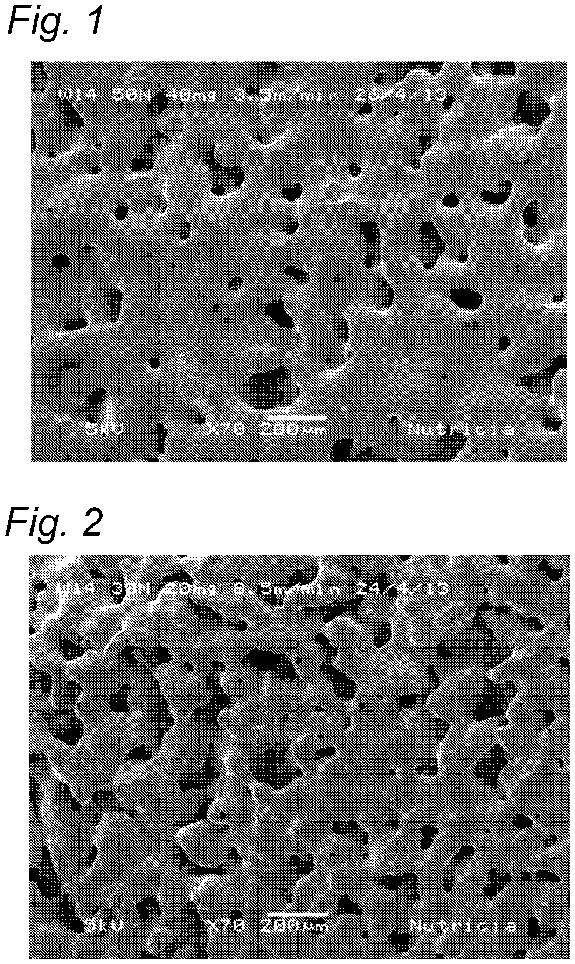

Using the herein mentioned method, the surface porosity of the tablet surface depicted in Figure 2 of WO2012/1099472 A1 was determined as a reference. The surface porosity thereof was determined to be 5%.

### Example 7: Colour measurements on solid milk units

The YI E313 yellow index, which is a standard index used for determining yellow surface coloration, was used for determining the white/yellow coloration of the solid milk tablets of **Table 3.** The yellow index runs from 0 to 100, where 0 corresponds to white and 100 to yellow. Solid milk tablets were placed in a Minolta Chroma Meter CR-410, equipped with a D65 light source. For each measurement, nine tablets were positioned next to each other in a 3x3 rectangular fashion to produce one sufficiently large, continuous rectangular surface that allows making colour measurements with the equipment set-up. Before the samples were measured, the device was calibrated with a white calibration tile (S.No.17333015 D65 (Y 92.7, x 0.3150, y 0.3208)) to obtain absolute colour values.

Next, the Chroma Meter was placed on top of the continuous, rectangular solid milk tablet surface and three colour measurements were made per individual sample, as the machine gives off three flashes when the trigger is pulled. Average results are presented in Table 6. Results showed that there appears to be a trend in the sense that all tablets all had a coloration of below 32.97, with coloration increasing with increased water addition.

**Table 6. White - yellow coloration of solid milk tablets obtained according to the present invention.**

| Amount of water added | Hardness After Press | | | |
|---|---|---|---|---|
| | 20 N | 30 N | 40 N | 50 N |
| 20 mg | 24.89 | 28.01 | 28.44 | 28.78 |
| 30 mg | 27.28 | 28.37 | 29.63 | 27.25 |
| 40 mg | 29.22 | 29.27 | 30.87 | 29.48 |
| 50 mg | 31.95 | 32.97 | 30.69 | 30.06 |

In contrast to the results presented in Table 6, the YI E313 yellow index of commercially available solid milk tablets from Meiji (stage 0, Hohoemi Cubes with the following macronutrients per 100g; 11.8 g protein, 25.9 g fat and 57.2 g carbohydrates) was determined at 44.08 which is a much more yellow coloration than any of the solid milk tablets of **Table 6.** Results were confirmed by visual observations for other solid milk tablets as obtained.

The macronutrient profile (expressed as g/100g tablet) of the solid milk tablets obtained according to the invention is very similar to the tested Meiji tablets with 9.3 g protein, 20.6 g fat and 59.3 g carbohydrates. Solid milk tablets with a different but yet again comparable macronutrient profile (9.7 g protein, 24.7 g fat and 53.8 g carbohydrates, expressed as g/100g tablet) obtained with the compacting, humidifying and drying steps of the present invention had a whiteness similar to the results shown in **Table 6** (results not shown).

Thus, surprisingly the method of the present invention allows the preparation of solid milk tablets that are less yellow than currently marketed solid milk tablets. As white coloration is seen as an important sensorial quality parameter of milk by consumers, the milk tablets obtained according to the present invention are considered more attractive for the consumer than more yellow solid milks.

## Claims

1. A method for preparing compressed solid milk tablets, comprising the steps of
a) compressing milk powder to obtain compressed solid milk units with a mechanical strength of between 10kPa and 300kPa,
b) humidifying the compressed solid milk units by exposing said units in a humidifying chamber to humid air having a relative humidity of more than 95% and a temperature of between 60 and 90°C, wherein the humid air comprises condensed water droplets, wherein the exposure time of the solid milk units in the humidifying chamber is less than 5 seconds, and
c) drying the humidified and compressed solid milk units to obtain compressed solid milk tablets.

2. The method according to claim 1, wherein the compaction ratio of the compressed solid milk units obtained in step a) lies between 0.30 and 0.65, preferably between 0.40 and 0.62, more preferably between 0.47 and 0.60.

3. The method according to any one of claims 1 to 2, wherein the milk powder comprises particles having an average size comprised between 30 µm and 700 µm, preferably comprised between 60 µm and 400 µm, more preferably comprised between 75 µm and 300 µm.

4. The method according to any one of claims 1 to 3, wherein the compressed solid milk units have a total surface area of between 10 and 50 cm², preferably 15 to 40 cm², more preferably between 18 and 35 cm², most preferably between 20 and 25 cm²; and/or wherein the solid milk units have a total weight of between 1 and 10 grams, preferably between 2 and 8 grams, more preferably between 4 and 6 grams or about 5 grams.

5. The method according to any one of claims 1 to 4, wherein the compressed solid milk units have a temperature of between 4 and 30°C, preferably between 10 and 25°C upon entry of the humidifying chamber in step b); and/or wherein the exposure time in the humidifying chamber is between 1 and 4 seconds.

6. The method according to any one of claims 1 to 5, wherein the humidifying chamber is provided with humid air that is generated by boiling or holding water at a temperature which is elevated with respect to the temperature to which the solid milk units are exposed in the humidifying chamber to allow condensing of water vapour to occur; and/or wherein the humidifying chamber is provided with air that is generated by boiling or holding water at a temperature which is at least 50°C higher than the temperature in the humidifying chamber to which the solid compressed units are exposed to allow condensing of water vapour to occur.

7. The method according to any one of claims 1 to 6, wherein in step b) the solid milk units absorb an amount of water in the range of from 0.3 to 4 mg water per cm² surface area of the solid milk unit, preferably from 0.5 mg to 3 mg per cm², more preferably from 0.7 mg to 2.0 mg/cm²; and/or wherein in step b) the solid milk units absorb an amount of water in the range of from 0.10 to 2.0 wt%, preferably from 0.2 to 1.50 wt%, more preferably from 0.25 to 1.25 wt%, most preferably 0.25 to 0.45 wt% during humidification.

8. The method according to any one of claims 1 to 7, wherein in step b), the solid milk units are conveyed through the humidifying chamber.

9. The method according to any one of claims 1 to 8, wherein the drying step is carried out by infrared radiation and/or wherein the drying step results in a moisture level of the solid milk tablet which lies within a range of about +/- 0.2 % of the initial moisture level of the milk powder.

10. The method according to any one of claims 1 to 9, wherein after drying, a packaging step is included wherein solid milk tablets are packaged in a sealed package, preferably a sealed package comprising a replacement gas such as nitrogen and/or carbon dioxide.

11. The method according to any one of claims 1 to 10, wherein the obtained solid milk tablets have a friability of less than 5%.

12. A modular system for carrying out the method according to claims 1-11, comprising:
- a device for compressing milk powder to obtain compressed solid milk units with a mechanical strength of between 10 kPa and 300 kPa,
- a humidifying system including a humidifying chamber for humidifying the compressed solid milk units and means for producing a humid environment in the humidifying chamber, said environment comprising a relative humidity of more than 95%, a temperature of between 60 and 90°C and condensed water droplets, to obtain compressed humidified and compressed solid milk units,
- a drying device for drying the humidified and compressed solid milk units, and
- means for conveying or providing solid milk units from the compression device to the humidifying system and subsequently to the drying device for drying.

13. A modular system according to claim 12, wherein the humidifying chamber and means for producing the humid environment, preferably a water boiling device, are in fluid connection allowing humid air to be passed from said means to the humidifying chamber.

14. A modular system according to claim 12 or 13, comprising a packaging device for packaging of the solid milk tablets in a sealed package, preferably in a sealed package comprising a replacement gas such as nitrogen and/or carbon dioxide; and/or wherein solid milk units are conveyed to and through the humidifying chamber, preferably using a conveyor belt; and/or wherein the drying device comprises infra-red lamps to obtain a drying temperature of between 90 and 180°C.

15. A modular system according to any of claims 12 - 14, wherein the modular system is placed in a high-care environment or high-care zone.

## Patentansprüche

1. Verfahren zur Herstellung komprimierter Feste Milchtabletten, welches die Schritte umfasst
a) Komprimieren von Milchpulver mit einer mechanischen Kraft zwischen 10 kPa und 300 kPa, um komprimierte Feste Milcheinheiten zu erhalten,
b) Befeuchten der komprimierten Feste Milcheinheiten durch Aussetzen besagter Einheiten in einer Befeuchtungskammer zu feuchter Luft, welche eine relative Feuchtigkeit von mehr als 95% und eine Temperatur zwischen 60 und 90°C hat, wobei die feuchte Luft kondensierte Wassertröpfchen umfasst, wobei die Aussetzungsdauer der Feste Milcheinheiten in der Befeuchtungskammer weniger als 5 Sekunden ist, und
c) Trocknen der befeuchteten und komprimierten Feste Milcheinheiten, um komprimierte Feste Milchtabletten zu erhalten.

2. Verfahren nach Anspruch 1, wobei das Verdichtungsverhältnis der in Schritt a) erhaltenen komprimierten Feste Milcheinheiten zwischen 0,30 und 0,65 liegt, bevorzugt zwischen 0,40 und 0,62, bevorzugter zwischen 0,47 und 0,60.

3. Verfahren nach einem der Ansprüche 1 bis 2, wobei das Milchpulver Partikel umfasst, welche eine Durchschnittgröße in einem Bereich von 30 µm und 700 µm haben, bevorzugt in einem Bereich von 60 µm und 400 µm, bevorzugter in einem Bereich von 75 µm und 300 µm.

4. Verfahren nach einem der Ansprüche 1 bis 3, wobei die komprimierten Feste Milcheinheiten eine Oberfläche zwischen 10 und 50 cm² haben, bevorzugt 15 bis 40 cm², bevorzugter 18 bis 35 cm², am bevorzugtesten zwischen 20 und 25 cm²; und/oder wobei die Feste Milcheinheiten ein Gewicht zwischen 1 und 10 Gramm, bevorzugt zwischen 2 und 8 Gramm, bevorzugter zwischen 4 und 6 Gramm oder etwa 5 Gramm haben.

5. Verfahren nach einem der Ansprüche 1 bis 4, wobei die komprimierten Feste Milcheinheiten beim Eintritt in die Befeuchtungskammer in Schritt b) eine Temperatur zwischen 4 und 30°C haben, bevorzugt zwischen 10 und 25°C; und/oder wobei die Aussetzungsdauer in der Befeuchtungskammer zwischen 1 und 4 Sekunden ist.

6. Verfahren nach einem der Ansprüche 1 bis 5, wobei die Befeuchtungskammer mit feuchter Luft bereitgestellt wird, welche durch Kochen oder Halten von Wasser bei einer Temperatur erzeugt wird, welche in Bezug auf die Temperatur höher ist, bei welcher die Feste Milcheinheiten in der Befeuchtungskammer ausgesetzt werden, um eine Kondensation von Wasserdampf zu ermöglichen; und/oder wobei die Befeuchtungskammer mit Luft versorgt wird, welche durch Kochen oder Halten von Wasser bei einer Temperatur erzeugt wird, welche mindestens 50°C höher ist als die Temperatur in der Befeuchtungskammer, welcher die Feste Milcheinheiten ausgesetzt werden, um eine Kondensation von Wasserdampf zu ermöglichen.

7. Verfahren nach einem der Ansprüche 1 bis 6, wobei in Schritt b) die Feste Milcheinheiten eine Menge von Wasser in einem Bereich von 0,3 bis 4 mg Wasser pro cm² Oberfläche der Feste Milcheinheiten absorbieren, bevorzugt von 0,5 mg bis 3 mg pro cm² Oberfläche, bevorzugter von 0,7 mg bis 2 mg pro cm² Oberfläche; und/oder wobei die Feste Milcheinheiten eine Menge von Wasser in einem Bereich von 0,10 bis 2,0 Gew.%, bevorzugt von 0,2 bis 1,50 Gew.%, bevorzugter von 0,25 bis 1,25 Gew.%, am bevorzugtesten 0,25 bis 0,45 Gew.%, während der Befeuchtung absorbieren.

8. Verfahren nach einem der Ansprüche 1 bis 7, wobei in Schritt b) die Feste Milcheinheiten durch die Befeuchtungskammer befördert werden.

9. Verfahren nach einem der Ansprüche 1 bis 8, wobei der Trocknungsschritt durch Infrarotstrahlung ausgeführt wird und/oder wobei der Trocknungsschritt in einem Feuchtigkeitsgehalt der Feste Milchtabletten resultiert, welcher in einem Bereich von ± 0,2% des ursprünglichen Feuchtigkeitsgehalts des Milchpulvers liegt.

10. Verfahren nach einem der Ansprüche 1 bis 9, wobei nach der Trocknung ein Verpackungsschritt beinhaltet ist, wobei die Feste Milchtabletten in einer versiegelten Verpackung verpackt werden, bevorzugt in eine versiegelte Verpackung, welche ein Ersatzgas wie Stickstoff und/oder Kohlenstoffdioxid umfasst.

11. Verfahren nach einem der Ansprüche 1 bis 10, wobei die erhaltenen Feste Milchtabletten eine Brüchigkeit von weniger als 5% haben.

12. Modulares System zur Ausführung des Verfahrens nach Ansprüchen 1-11, welches umfasst:
- Vorrichtung zum Komprimieren von Milchpulver mit einer mechanischen Kraft zwischen 10 kPa und 300 kPa, um komprimierte Feste Milcheinheiten zu erhalten,
- Befeuchtungssystem, welches eine Befeuchtungskammer zur Befeuchtung von Feste Milcheinheiten und Mittel zur Erzeugung einer feuchten Umgebung in der Kammer beinhaltet, wobei besagte feuchte Umgebung eine relative Feuchtigkeit von 95%, eine Temperatur zwischen 60 und 90°C und kondensierte Wasser-Tröpfchen umfasst, um komprimierte befeuchtete und komprimierte Feste Milcheinheiten zu erhalten,
- Trocknungsvorrichtung zum Trocknen der befeuchteten und komprimierten Feste Milcheinheiten, und
- Mittel zur Beförderung oder Bereitstellung der Feste Milcheinheiten von die Komprimierungsvorrichtung zu dem Befeuchtungssystem und anschließend zu die Trocknungsvorrichtung zum Trocknen.

13. Modulares System nach Anspruch 12, wobei die Befeuchtungskammer und die Mittel zur Erzeugung der feuchten Umgebung, bevorzugt eine Wasserkochvorrichtung, in Fluidverbindung sind, um den Durchtritt von feuchter Luft von dem besagtem Mittel zu der Befeuchtungskammer zu ermöglichen.

14. Modulares System nach Anspruch 12 oder 13, welches eine Verpackungsvorrichtung zum Verpacken der Feste Milchtabletten in einer versiegelten Verpackung umfasst, bevorzugt in einer versiegelten Verpackung, welche ein Ersatzgas wie Stickstoff und/oder Kohlenstoffdioxid umfasst; und/oder wobei die Feste Milcheinheiten zu und durch die Befeuchtungskammer befördert werden, bevorzugt unter Verwendung eines Förderbandes ; und/oder wobei die Trocknungsvorrichtung Infrarotlampen umfasst, um eine Trocknungstemperatur zwischen 90 und 180°C zu erlangen.

15. Modulares System nach einem der Ansprüche 12-14, wobei das modulare System in einer high-care Zone oder high-care Umgebung platziert ist.

## Revendications

1. Procédé de préparation de tablettes de lait solide comprimées, comprenant les étapes suivantes :
a) comprimer de la poudre de lait pour obtenir des unités de lait solide comprimées avec une résistance mécanique entre 10 kPa et 300 kPa,
b) humidifier les unités de lait solide comprimées par exposition desdites unités dans une chambre d'humidification à de l'air humide ayant une humidité relative supérieure à 95 % et une température entre 60 et 90°C, dans laquelle l'air humide comprend des gouttelettes d'eau condensées, dans laquelle le temps d'exposition des unités de lait solide dans la chambre d'humidification est inférieur à 5 secondes, et
c) faire sécher les unités de lait solide comprimées et humidifiées pour obtenir des tablettes de lait solide comprimées.

2. Procédé selon la revendication 1, dans lequel le taux de compactage des unités de lait solide comprimées obtenues à l'étape a) se situe entre 0,30 et 0,65, de préférence entre 0,40 et 0,62, plus préférentiellement entre 0,47 et 0,60.

3. Procédé selon l'une quelconque des revendications 1 et 2, dans lequel la poudre de lait comprend des particules ayant une taille moyenne comprise entre 30 µm et 700 µm, de préférence comprise entre 60 µm et 400 µm, plus préférentiellement comprise entre 75 µm et 300 µm.

4. Procédé selon l'une quelconque des revendications 1 à 3, dans lequel les unités de lait solide comprimées ont une surface totale entre 10 et 50 cm², de préférence entre 15 et 40 cm², plus préférentiellement entre 18 et 35 cm², le plus préférentiellement entre 20 et 25 cm² ; et/ou dans lequel les unités de lait solide ont un poids total entre 1 et 10 grammes, de préférence entre 2 et 8 grammes, plus préférentiellement entre 4 et 6 grammes ou environ 5 grammes.

5. Procédé selon l'une quelconque des revendications 1 à 4, dans lequel les unités de lait solide comprimées ont une température entre 4 et 30°C, de préférence entre 10 et 25°C à l'entrée de la chambre d'humidification à l'étape b) ; et/ou dans lequel le temps d'exposition dans la chambre d'humidification est entre 1 et 4 secondes.

6. Procédé selon l'une quelconque des revendications 1 à 5, dans lequel la chambre d'humidification est fournie en air humide produit en faisant bouillir ou en maintenant de l'eau à une température qui est élevée par rapport à la température à laquelle sont exposées les unités de lait solide dans la chambre d'humidification pour permettre à la condensation de la vapeur d'eau de se produire ; et/ou dans lequel la chambre d'humidification est fournie en air produit en faisant bouillir ou en maintenant de l'eau à une température qui est au moins 50°C supérieure à la température dans la chambre d'humidification à laquelle sont exposées les unités solide comprimées pour permettre à la condensation de la vapeur d'eau de se produire.

7. Procédé selon l'une quelconque des revendications 1 à 6, dans lequel à l'étape b) les unités de lait solide absorbent une quantité d'eau dans la plage de 0,3 à 4 mg d'eau par cm² de surface de l'unité de lait solide, de préférence de 0,5 mg à 3 mg par cm², plus préférentiellement de 0,7 mg à 2,0 mg/cm²; et/ou dans lequel à l'étape b) les unités de lait solide absorbent une quantité d'eau dans la plage de 0,10 à 2 % en poids, de préférence de 0,2 à 1,50 % en poids, plus préférentiellement de 0,25 à 1,25 % en poids, le plus préférentiellement de 0,25 à 0,45 % en poids pendant l'humidification.

8. Procédé selon l'une quelconque des revendications 1 à 7, dans lequel à l'étape b), les unités de lait solide sont acheminées à travers la chambre d'humidification.

9. Procédé selon l'une quelconque des revendications 1 à 8, dans lequel l'étape de séchage est réalisée par rayonnement infrarouge et/ou dans lequel l'étape de séchage résulte en un niveau d'humidité de la tablette de lait solide qui se situe dans une plage d'environ +/-0,2 % du niveau d'humidité initial de la poudre de lait.

10. Procédé selon l'une quelconque des revendications 1 à 9, dans lequel, après séchage, une étape de conditionnement est incluse dans laquelle les tablettes de lait solide sont conditionnées dans un contenant hermétique, de préférence un contenant hermétique comprenant un gaz de remplacement tel que l'azote et/ou le dioxyde de carbone.

11. Procédé selon l'une quelconque des revendications 1 à 10, dans lequel les tablettes de lait solide obtenues ont une friabilité inférieure à 5 %.

12. Système modulaire pour la mise en œuvre du procédé selon l'une de revendications 1 à 11, comprenant :
- un dispositif de compression de la poudre de lait pour obtenir des unités de lait solide comprimées avec une résistance mécanique de 10 kPa à 300 kPa,
- un système d'humidification comprenant une chambre d'humidification pour humidifier les unités de lait solide comprimées et des moyens de production d'un environnement humide dans la chambre d'humidification, ledit environnement comprenant une humidité relative supérieure à 95 %, une température entre 60 et 90°C et des gouttelettes d'eau condensée, pour obtenir des unités de lait solide comprimées et des unités de lait solide comprimées et humidifiées,
- un dispositif de séchage pour sécher les unités de lait solide humidifiées et comprimées, et
- des moyens pour acheminer ou fournir des unités de lait solide du dispositif de compression au système d'humidification et par la suite au dispositif de séchage pour le séchage.

13. Système modulaire selon la revendication 12, dans lequel la chambre d'humidification et les moyens de production de l'environnement humide, de préférence un dispositif de mise en ébullition de l'eau, sont en liaison de fluide permettant de faire passer de l'air humide desdits moyens à la chambre d'humidification.

14. Système modulaire selon la revendication 12 ou 13, comprenant un dispositif de conditionnement pour le conditionnement des tablettes de lait solide dans un contenant hermétique, de préférence dans un contenant hermétique comprenant un gaz de remplacement tel que l'azote et/ou le dioxyde de carbone ; et/ou dans lequel les unités de lait solide sont acheminées vers et à travers la chambre d'humidification, en utilisant de préférence une courroie de transport ; et/ou dans lequel le dispositif de séchage comprend des lampes infrarouges pour obtenir une température de séchage entre 90 et 180°C.

15. Système modulaire selon l'une quelconque des revendications 12 à 14, dans lequel le système modulaire est placé dans un environnement très soigné ou une zone de soins élevés.
